(19) Europäisches Patentamt
European Patent Office
Office européen des brevets

(11) EP 2 075 601 A1

(12) **EUROPÄISCHE PATENTANMELDUNG**

(43) Veröffentlichungstag:
**01.07.2009 Patentblatt 2009/27**

(51) Int Cl.:
***G02B 5/30*** *(2006.01)* ***C09K 19/16*** *(2006.01)*

(21) Anmeldenummer: **07025159.0**

(22) Anmeldetag: **24.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder:
- **Lofo High Tech Film GmbH**
  **79576 Weil am Rhein (DE)**
- **Merck Patent GmbH**
  **64293 Darmstadt (DE)**

(72) Erfinder:
- **Siemann, Ulrich, Dr.**
  **79576 Weil am Rhein (DE)**
- **Rieger, Bernhard, Dr.**
  **64389 Münster-Altheim (DE)**
- **Pauluth, Detlef, Dr.**
  **64372 Ober-Ramstadt (DE)**
- **Hauser, Ilona**
  **79400 Kandern (DE)**

(74) Vertreter: **Maucher, Wolfgang et al**
**Patent- und Rechtsanwaltssozietät**
**Maucher, Börjes & Kollegen**
**Urachstrasse 23**
**79102 Freiburg i. Br. (DE)**

(54) **Optische Kompensationsfolien für Flüssigkristallanzeigen und damit zusammenhängende Erfindungen**

(57) Die Erfindung betrifft Kompensationsfolien für Flüssigkristallanzeigen, Polarisatorplatten, welche mindestens eine solche Kompensationsfolie aufweisen, Flüssigkristallanzeigen, welche Kompensationsfolien der genannten Art aufweisen, sowie Verfahren zur Herstellung der genannten Kompensationsfolien, Polarisatorplatten und Flüssigkristallanzeigen, die Verwendung der unten genauer beschriebenen Verbindungen der Formel I als Zusätze zu Kompensationsfolien für Flüssigkristallanzeigen, sowie weitere diesbezügliche Erfindungsgegenstände. Die erfindungsgemäßen optischen Kompensationsfolien beinhalten als Zusätze ein oder mehrere stäbchenförmige Flüssigkristalle der Formel,

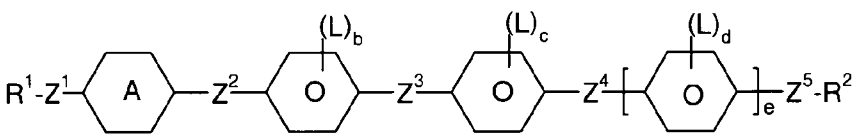

I

worin die Reste die in der Beschreibung genannten Bedeutungen haben, zur Einstellung geeigneter Retardationswerte Reund Rth.

EP 2 075 601 A1

## Beschreibung

Die Erfindung betrifft Kompensationsfolien für Flüssigkristallanzeigen mit unten genannten Zusätzen stäbchenförmiger Flüssigkristalle der Formel I, Polarisatorplatten, welche mindestens eine solche Kompensationsfolie aufweisen, Flüssigkristallanzeigen, welche Kompensationsfolien der genannten Art aufweisen, sowie Verfahren zur Herstellung der genannten Kompensationsfolien, Polarisatorplatten und Flüssigkristallanzeigen, die Verwendung der unten genauer beschriebenen Verbindungen der Formel I als Zusätze zu Kompensationsfolien für Flüssigkristallanzeigen, sowie weitere unten ersichtliche Erfindungsgegenstände.

Flüssigkristalle sind Materialien, die sowohl kristallähnliche als auch flüssigkeitsähnliche Eigenschaften aufweisen.

Materialien, die flüssigkristalline Eigenschaften aufweisen, können im Prinzip in eine von zwei unterschiedlichen Klassen mesomorpher Materialien eingeordnet werden: anisometrische und amphiphile Moleküle. In der ersten Klasse lassen sich anisometrische, stäbchenförmige (calamitische) oder scheibenförmige (diskotische) Moleküle zusammenfassen, die vor allem thermotrope flüssigkristalline Phasen aufweisen. Auch polycatenare (calamitische mit mehreren flexiblen Ketten an einem oder beiden Enden) oder gebogene (bananenförmige) Moleküle sind bekannt. Die zweite Klasse steht für amphiphile Moleküle wie Detergenzien und Lipide, die neben lyotropen oft auch thermotrope Mesophasen ausbilden können.

Die flüssigkristallinen Phasen werden nach dem Grad der Fernordnung ihrer Bestandteile und der Symmetrie der Mesophasen eingeteilt. Mesophasen ohne Orientierungsordnung, die dennoch eine Positionsfernordnung zeigen, werden als plastische Kristalle bezeichnet. Wird die Orientierungsordnung zwar beibehalten, aber die Positionsfernordnung geht vollständig verloren, bezeichnet man die Mesophasen als nematische flüssigkristalline Phasen. Geht die Fernordnung nur in einer oder in zwei Raumrichtungen verloren, so handelt es sich um positionsferngeordnete Mesophasen, zu denen smektische und kolumnare Phasen gehören.

Thermotrope Flüssigkristalle finden beispielsweise Anwendung in elektrooptischen Anzeigen, wie Flüssigkristallanzeigen (oder -bildschirmen).

Flüssigkristall-Anzeigen (engl. Liquid Crystal Displays, LCD) werden zunehmend häufig anstelle von Kathodenstrahlröhren verwendet, da sie eine geringe Dicke, ein geringes Gewicht und einen niedrigen Stromverbrauch haben.

Flüssigkristallanzeigen beinhalten in der Regel mindestens zwei Polarisatoren oberhalb bzw. unterhalb des Bereichs, der die Flüssigkristalle, (durchsichtige) Elektroden, Abstandshalter und (z.B. Glas-) Platten für die Regelung der Ausrichtung und die Bevorratung der Flüssigkristallverbindungen selbst umfasst, daneben gegebenenfalls noch jeweils ein oder mehrere Kompensationsfilme, helligkeitsverstärkende Folien, Prismenfolien, Diffusorfilme, Lichtleitplatten, reflektierende Schichten und Lichtquellen sowie als Bestandteil der eigentlichen Flüssigkristallzelle Dünnschichttransistoren (engl. Thin Film Transistor, TFT) umfassen kann. Auch Plasma-Displays benötigen geeignete Schutzfilme, einerseits als Schutz, andererseits als Basis für funktionale Beschichtungen, wie Antireflex-Beschichtungen.

Es gibt eine Reihe unterschiedlicher Ausgestaltungsmöglichkeiten für Flüssigkristallanzeigen, von denen beispielhaft nachfolgend einige beschrieben werden.

Wie erwähnt, weisen Flüssigkristallanzeigen in der Regel ein Paar polarisierender Platten (Polarisatorplatten) und dazwischen Flüssigkristallzellen auf. Diese beinhalten üblicherweise zwei planparallele Substrate, von denen mindestens eines transparent ist und mindestens eines auf der Innenseite eine Elektrodenschicht aufweist, und eine dazwischen befindliche Schicht von üblicherweise stäbchenförmigen Flüssigkristallmolekülen . Die stäbchenförmigen Flüssigkristallmoleküle werden zwischen den Substraten vorgelegt, und die Elektrodenschicht dient dazu, eine Spannung an die stäbchenförmigen Flüssigkristallmoleküle anzulegen. Auf den Substraten bzw. auf der Elektrodenschicht ist üblicherweise noch eine Orientierungsschicht zur einheitlichen Ausrichtung der stäbchenförmigen Flüssigkristallmoleküle vorgesehen. Jede Polarisatorplatte beinhaltet z.B. ein Paar transparenter Schutzfilme und dazwischen mindestens eine polarisierende Membran (Polarisatormembran).

In einer Flüssigkristallanzeige ist oft eine optische Kompensationsfolie (Phasenverzögerer, Verzögerungsplatte) zwischen der Flüssigkristallzelle und der Polarisatorplatte angebracht, um beim angezeigten Bild unerwünschte Färbung zu verhindern, die u.a. aufgrund der inhärenten Doppelbrechung der Flüssigkristallschicht auftritt. Die schichtweise Zusammensetzung der Polarisatorplatte dient als eine elliptisch polarisierende Platte. Die optische Kompensationsfolie vergrößert in der Regel auch den Betrachtungswinkel (Winkel relativ zur Oberfläche der Anzeigevorrichtung), bei dem das Bild noch mit akzeptablem Kontrast gesehen werden kann. Als optische Kompensationsfolie wird u.a. eine gereckte doppelbrechende Polymerfolie oder eine mit doppelbrechenden Substanzen beschichtete Folie verwendet.

Bei Dünnschicht-Flüssigkristallanzeigen (TFT) des Typus nematische Drehzelle (TN = Twisted nematic) wird die optische Kompensationsfolie zwischen der Flüssigkristallzelle und der Polarisatorplatte vorgesehen, um hohe Bildqualität zu gewährleisten, doch ist dieser Typ oft recht dick.

Andere Anordnungen sehen beispielsweise vor, dass die optische Kompensationsfolie auf einer Oberfläche der Polarisatorplatte vorgesehen ist und gleichzeitig die Funktion einer Schutzfolie hat, während auf der Gegenseite eine elliptisch polarisierende Polarisatorplatte angeordnet ist, die auch mit einer Schutzschicht nach außen versehen

werden kann. Dies ergibt relativ dünne Bildschirme und bei Aufsicht von vorne kontrastreiche Bilder, doch kann es zu Verformungen der optischen Kompensationsfolie kommen und so zu unerwünschten Phasenretardation und damit Farbabweichungen des Bildes kommen. Um dieses Problem zu überwinden, wird bei einem anderen Typ der Anzeige eine optisch anisotrope Schicht, die eine diskotische Verbindung beinhaltet, auf einem transparenten Träger vorgesehen, um eine optische Kompensationsfolie, die als Schutzschicht für die Polarisatorplatte dient, auszubilden, was zu einer dünnen und relativ haltbaren Flüssigkristallanzeige führt.

Auch Anordnungen, bei denen einer der Schutzfilme der Polarisatorplatte direkt die optische Kompensationsfolie darstellt, sind bekannt, die besonders dünne Schichten ergeben können.

Viele andere Anordnungen wurden gefunden, die jeweils spezifische Vorteile aufweisen.

Allen ist gemeinsam, dass sie zur Erhöhung des Betrachtungswinkels mindestens eine optische Kompensationsfolie aufweisen.

Diese kann beispielsweise aus einem Zelluloseacylat, insbesondere einem Zellulose-$C_1$-$C_7$-alkanoat (Z-$C_1$-$C_7$-A), z.B. Zelluloseacetat und/oder -propionat (z.B. CAP) oder vorzugsweise Zelluloseacetat (Triacetyl-Zellulose, TAC) als Basis bestehen. Normalerweise ist eine Zelluloseacylat-Folie optisch isotrop in Bezug auf die senkrechte Achse zur Folienfläche (mit relativ geringer Retardation). Um als optische Kompensationsfolie dienen zu können, muss sie jedoch optische Anisotropie und vorzugsweise eine hohe Retardation (= optische Verzögerung) zeigen. Neben gereckten doppelbrechenden synthetischen Polymermaterialien wurden auch anisotrope Schichten, die diskotische Moleküle beinhalten, vorgeschlagen, die durch Ausrichten der diskotischen Moleküle und anschließende Fixierung in der ausgerichteten Form hergestellt werden. US 6,559,912 und US 2003/0218709 beschreiben Zelluloseacetatfolien mit diskotischen Molekülen z.B. auf 1,3,5-Triazinbasis oder polymere Flüssigkristalle oder Keton-, Ether- und/oder Ester-Verbindungen oder solche mit polymerisierbaren Resten.

Schwierigkeiten bei der Verwendung von derartigen Zusätzen können zum einen bei der Verträglichkeit mit den bei der Herstellung von Z-$C_1$-$C_7$-A (insbesondere TAC)-Folien verwendeten Lösungsmitteln und anderen Zusätzen auftreten. Zum anderen kann es wegen geringer Verträglichkeit der verwendeten Zusätze mit den Endprodukten oder wegen zu hoher Flüchtigkeit und/ oder Diffusionsneigung zu mangelnder Dauerhaftigkeit (Haltbarkeit) der erhaltenen Folien kommen.

Auch gibt es, wie oben bereits angedeutet, eine Fülle von unterschiedlichen LCD-Systemen, so dass es schwierig sein kann, Folien an die gewünschten Bedingungen anzupassen. So ist denkbar, dass nur eine Folie zur Kompensation verwendet wird, oder zwei oder mehr, und dass je nach Dicke und anderen Erfordernissen die Eigenschaften wie Dicke und Masse etc. der Kompensationsfolie(n) an bestimmte Anforderungen eines LCD anpassbar sein muss.

Die Verzögerungswerte in der Richtung der Ebene (Ro; sogenannte "in plane" Retardation; oft auch als Re bezeichnet) und in der Richtung der Dicke (Rth; sogenannte "out of plane" Retardation) der optischen Kompensationsfolie werden jeweils durch die folgenden Formeln beschrieben:

$$Ro\ (= Re) = (nx - ny) \times d \qquad (I)$$

$$Rth = \{[(nx + ny)/2] - nz\} \times d \qquad (II)$$

Dabei ist nx der Brechungsindex entlang der langsamen Achse (derjenigen mit dem größten Brechungsindex, d.h. derjenigen Schwingungsrichtung, wo eine Welle die langsamere Ausbreitungsgeschwindigkeit hat, "langsame Achse") in der Ebene der Folie, ny der Brechungsindex entlang der schnellen Achse (derjenigen mit dem geringsten Brechungsindex, d.h. derjenigen Schwingungsrichtung, wo eine Welle die schnellere Ausbreitungsgeschwindigkeit hat, "schnelle Achse") in der Ebene der Folie (senkrecht zu nx), und nz der Brechungsindex in Richtung der Fläche der Folie (senkrecht zu nx und ny), d ist die Dicke der Folie (in mm).

Die Einstellung der geeigneten Werte für Ro und Rth hängt vom jeweils verwendeten Typ der Flüssigkristallzelle und der dadurch bewirkten Änderung des Polarisationszustandes bei der Ansteuerung der Zelle ab.

Unterschiedliche Retardationswerte zur Korrektur werden für die üblichen Typen der Anzeigen der Bilddarstellung wie z.B. TN (twisted nematic), STN (super twisted nematic), VA (vertically aligned), IPS (in plane switching) benötigt.

Angesichts der oben genannten Schwierigkeiten besteht die Aufgabe, Kompensationsfolien zu finden, welche eine die genaue Einstellung der Retardationswerte Ro (= Re) und Rth ermöglichen und eine hohe Dauerhaftigkeit dieser Werte aufweisen, bei denen die verwendeten Zusätze sowohl während der Herstellung als auch im Endprodukt eine gute Verträglichkeit aufweisen, keine Färbung oder Trübung hervorrufen und mit denen die erforderlichen optischen Eigenschaften durch geeignete Maßnahmen wie Recken flexibel auf gewünschte Displays eingestellt werden können,

beispielsweise hinsichtlich der verwendbaren Dicke und der Frage, ob anstelle von zwei Kompensationsfolien nur eine eingesetzt werden kann. Wenn die verwendeten Substanzen über einen großen Konzentrationsbereich verträglich sind, können die Retardationswerte sowohl über die Konzentration der verwendeten Zusätze als auch durch speziell angepasste Nachbehandlung variiert werden, was eine große Flexibilität für den Anwendungsfall ergäbe.

Es wurde nun gefunden, dass es durch Verwendung bestimmter stäbchenförmiger Zusätze möglich ist, ein bis alle der in der Aufgabenstellung angegebenen Ziele zu erreichen.

Die Erfindung betrifft daher in einer ersten Ausführungsform eine optische Kompensationsfolie (vorzugsweise für Flüssigkristallanzeigen) auf Zelluloseacylat-Basis, insbesondere auf CAP- oder vorzugsweise Zelluloseacetatbasis, welche mindestens eine aromatische Verbindung mit mindestens zwei aromatischen Ringen aufweist, dadurch gekennzeichnet, dass es sich bei der aromatischen Verbindung um eine solche der Formel I handelt,

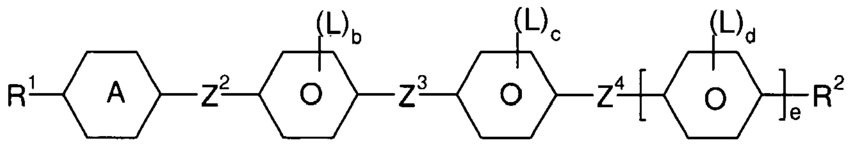

I

worin

$R^1$ geradkettiges Alkyl oder Alkoxy mit 1 bis 12 C-Atomen, worin auch eine oder mehrere $CH_2$-Gruppen durch -O-, -S-, -CO-, -CO-O-, -O-CO-, -CO-$NR^4$-, -$NR^4$-CO- so ersetzt sein können, dass O- und/oder S-Atome nicht direkt miteinander verknüpft sind, und worin auch ein oder mehrere H-Atome durch F ersetzt sein können,

$R^2$ CN, F, Cl oder geradkettiges Alkyl oder Alkoxy mit 1 bis 12 C-Atomen, worin auch eine oder mehrere $CH_2$-Gruppen durch -O-, -S-, -CO-, -CO-O-, -O-CO-, -CO-$NR^4$-, -$NR^4$-CO- so ersetzt sein können, dass O- und/oder S-Atome nicht direkt miteinander verknüpft sind, und worin auch ein oder mehrere H-Atome durch F ersetzt sein können,

der Ring

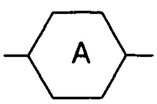

entweder

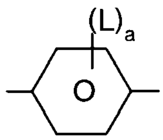

oder

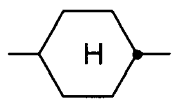

;

$Z^2$-$Z^4$ jeweils unabhängig voneinander -CO-O-, -O-CO-, -$CONR^4$-, -$NR^4CO$-, -$CH_2O$-, - $OCH_2$-, -$CH_2S$-, -$SCH_2$- oder eine Einfachbindung, vorzugsweise eine Einfachbindung,

$R^4$ Wasserstoff oder $C_1$-$C_7$-Alkyl,

die Reste L unabhängig voneinander H, F oder einer der Reste L auch Cl;

a, b, c und d jeweils unabhängig voneinander eine ganze Zahl 0, 1 oder 2; und

e eine ganze Zahl 0 oder 1 bedeuten.

Die Erfindung betrifft auch ein Verfahren zur Herstellung einer optischen Kompensationsfolie (vorzugsweise für Flüssigkristallanzeigen), die mindestens eine Verbindung der Formel I die eine oder mehrere Verbindungen der Formel I beinhaltet, wobei eine Verbindung der Formel I während der Herstellung mit den Ausgangsmaterialien für die Kompensationsfolie vermischt wird. Vorzugsweise wird die Folie in einem anschließenden Schritt mindestens in einer, beispielsweise in einer bis drei (x, y und z, beispielsweise in z-Richtung mittels anschließend zu verwerfender Schrumpffolien), vorzugsweise in zwei Richtungen gereckt.

In einer weiteren Ausführungsform betrifft die Erfindung eine Polarisationsplatte (vorzugsweise für Flüssigkristallanzeigen), welche ein Paar transparente Schutzfilme und eine polarisierende Membran zwischen den Schutzfilmen aufweist, wobei mindestens einer der transparenten Schutzfilme mindestens eine optische Kompensationsfolie auf Zelluloseaylatbasis aufweist, die eine oder mehrere Verbindungen der Formel I beinhaltet, sowie ein Verfahren zu deren

Herstellung.

In einer weiteren Ausführungsform betrifft die Erfindung eine Flüssigkristallanzeige, die mindestens eine optische Kompensationsfolie aufweist, die mindestens eine Verbindung der Formel I beinhaltet, sowie ein Verfahren zu deren Herstellung.

In einer weiteren Ausführungsform der Erfindung betrifft diese die Verwendung mindestens einer Verbindung der Formel I zur Herstellung von optischen Kompensationsfolien für Flüssigkristallanzeigen, wobei mindestens eine Verbindung der Formel I mindestens einer Kompensationsfolie bei der Herstellung der Kompensationsfolie zugesetzt und vorzugsweise in einem weiteren Schritt die Kompensationsfolie dann zur Herstellung einer Flüssigkristallanzeige verwendet wird.

Die vor- und nachstehend verwendeten allgemeinen Ausdrücke und Symbole haben, soweit nicht anders angegeben, soweit sie nicht bereits vorstehend auch in der Einleitung bereits definiert sind, vorzugsweise die vorstehen oder nachfolgend genannten Bedeutungen, wobei für jeden Erfindungsgegenstand, unabhängig von den anderen, ein, mehrere oder alle allgemeineren Ausdrücke oder Symbole durch nachfolgend genannte spezifischere Definitionen ersetzt werden können, was jeweils zu bevorzugten Ausführungsformen der Erfindung führt.

Optische Kompensationsfolien werden nachfolgend auch nur als "Kompensationsfolien" bezeichnet. Erfindungsgemäß bevorzugt sind optische Kompensationsfolien auf Zelluloseacylat-Basis, insbesondere auf CAP- oder vorzugsweise Zelluloseacetatbasis.

Zelluloseacylat bedeutet insbesondere ein Zellulosetriacylat, wobei die Acylreste gleich oder (insbesondere statistisch) unterschiedlich sein können, vorzugsweise ein entsprechendes Zellulose-tri-$C_1$-$C_7$-alkanoat, vorzugsweise -tri-$C_1$-$C_4$alkanoat, wie - butyrat, -propionat und/oder -acetat, wie insbesondere CAP (Celluloseacetopropionat) oder TAC (Cellulosetriacetat oder Triacetylcellulose).

Vorzugsweise liegt der Grad der Acyl-Substitution (Degree of acyl Substitution = DS), also die Anzahl der pro Zellulose-Untereinheit (Monosaccharid-Untereinheit mit 6 Kohlenstoffatomen) gebundenen Acylreste, bei 2,4 bis 3, insbesondere zwischen 2,7 und 2,98.

Beispielsweise hat im Falle von Triacetylcellulose das Celluloseacetat vorzugsweise einen Essigsäuregehalt von 59,0 bis 61,5 %, insbesondere von 59,5 bis 61,3 %. Der Ausdruck "Essigsäuregehalt" bedeutet dabei die Gewichtsmenge an gebundener Essigsäure je $C_6$-Untereinheit der Acetylcellulose. Die experimentelle Bestimmung kann beispielsweise nach ASTM: D-817-91 ("Tests of Cellulose Acetate) oder entsprechenden Vorschriften bestimmt werden. Soweit nicht anders angegeben, beziehen sich die vor- und nachstehend angegebenen Werte des Essigsäuregehaltes auf das Verfahren ASTM: D-817-91.

Die Polymolekularität (das Verhältnis von Gewichtsmittel zu Zahlenmittel), auch als Polydispersität bezeichnet, also das Verhältnis von stoffmengenbezogenem Mittelwert der Molmasse ($M_w$ = weight average molecular weight) zu anzahlbezogenem Mittelwert der Molmasse ($M_n$ = number average molecular weight), für erfindungsgemäße bzw. erfindungsgemäß herstellbare Zelluloseacatatfolien kann beispielsweise im Bereich von 1,5 bis 7 liegen, wie z.B. zwischen 2 und 4. Das Molekulargewicht wird dabei mittels Gelpermeationschromatographie mit Chloroform oder Methylenchlorid als Lösungsmittel bestimmt.

Eine erfindungsgemäße Kompensationsfolie ist vorzugsweise eine gereckte, insbesondere in zwei Richtungen (biaxial) gereckte Folie, deren Dicke, Gehalt an Verbindung(en) der Formel I und Reckungsparameter so ausgewählt sind, dass sie die unten als bevorzugt dargelegten Retardationswerte Ro (=Re) und Rth hat.

Vorzugsweise weist eine erfindungsgemäße Kompensationsfolie einen Gehalt von 0,5 bis 10 Gewichtsprozent, insbesondere von 2 bis 8 Gewichtsprozent, noch stärker bevorzugt von 2 bis 6 Gewichtsprozent, bezogen jeweils auf das Gesamtgewicht der Kompensationsfolie, auf.

"Gewicht" /z.B. in Gewichtsprozent oder Gew.-%) ist in dieser Offenbarung gleichbedeutend mit Masse definiert

Die erfindungsgemäße optische Kompensationsfolie auf Zelluloseaylatbasis beinhaltet mindestens eine Verbindung der Formel I insbesondere zur Einstellung einer geeigneten Retardation Ro und Rth wie oben definiert. Die Verfahren der Herstellung von erfindungsgemäßen Produkten und die Verwendung beinhaltet als funktionales Merkmal vorzugsweise ebenfalls den Zweck der Einstellung einer geeigneten Retardation Ro und Rth wie oben definiert.

Bevorzugte Verbindungen der Formel I sind ausgewählt aus den folgenden Unterformeln:

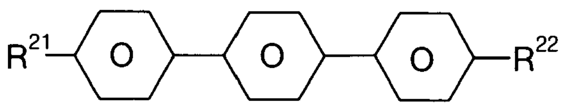

I1

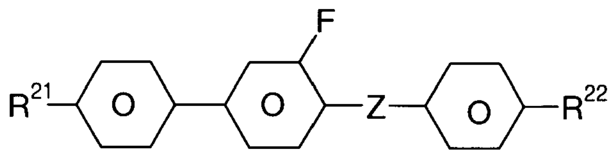

I2

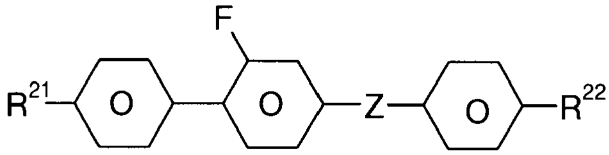

I3

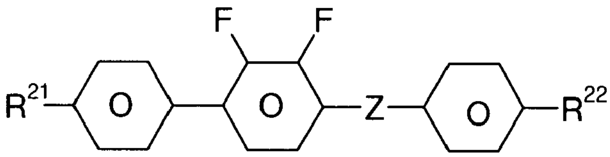

I4

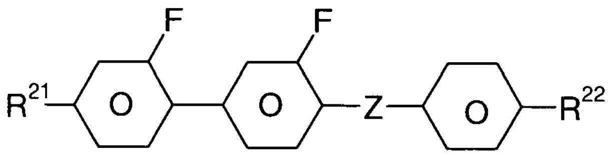

I5

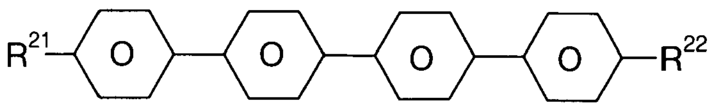

I6

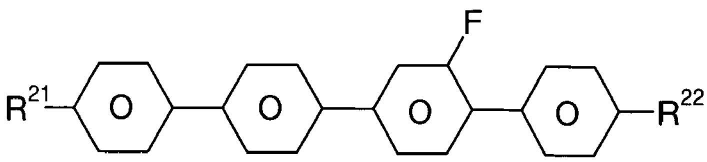

I7

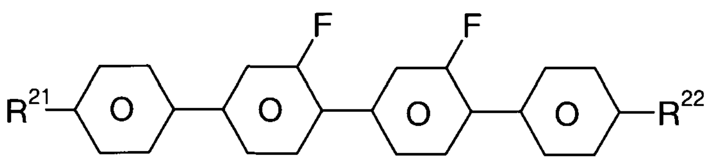

I8

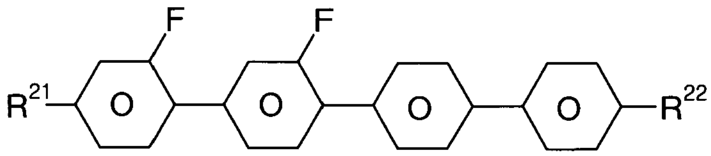

I9

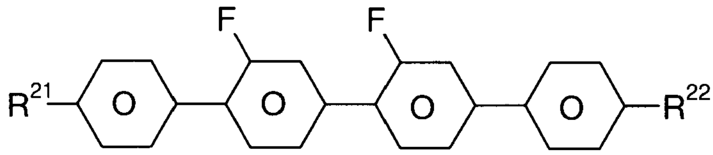

I10

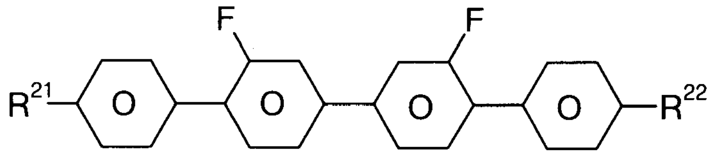

I11

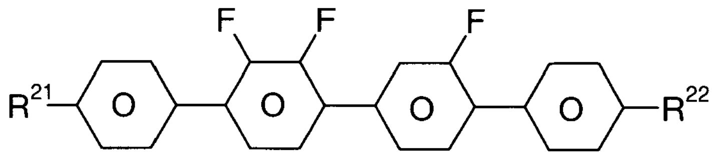

I12

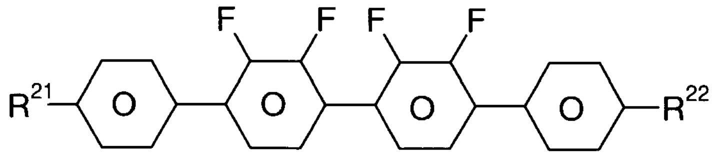

I13

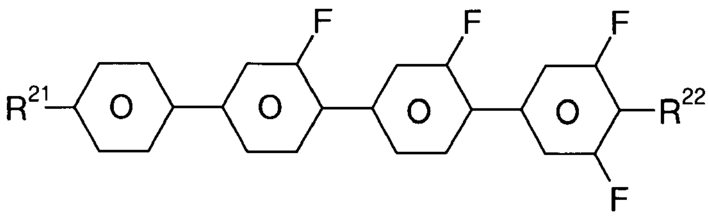

I14

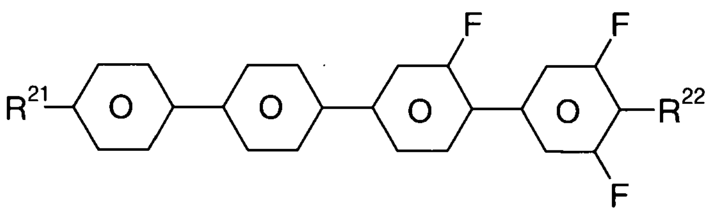

I15

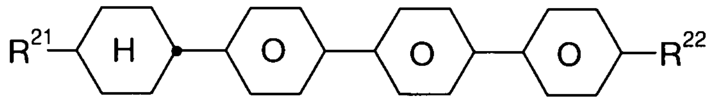

I16

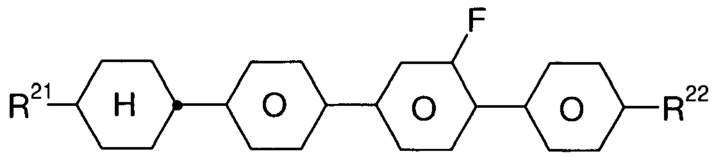

I17

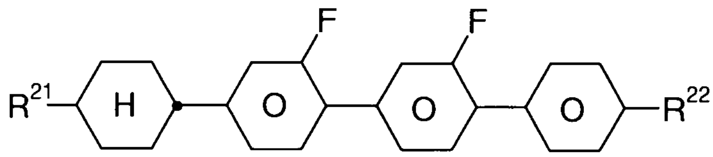

I18

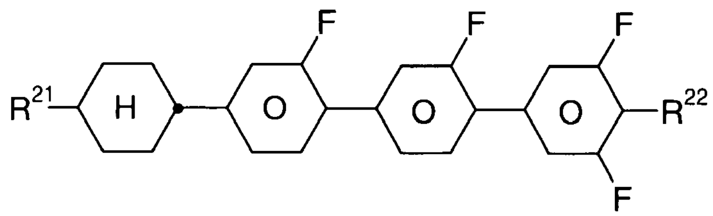

I19

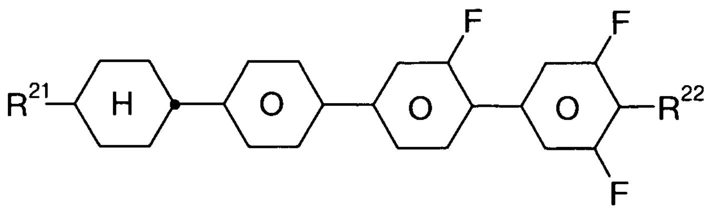

I20

worin $R^{21}$ für $R^1$ und $R^{22}$ für $R^2$ stehen, $R^1$ und $R^2$ die in Formel I angegebenen Bedeutungen besitzen, und Z eine der für $Z^3$ in Formel I angegebenen Bedeutungen besitzt und vorzugsweise -COO- oder eine Einfachbindung, ganz besonders bevorzugt eine Einfachbindung bedeutet.

Besonders bevorzugten sind die Verbindungen der Formeln I2, I3, I4, I11, I15 und I17.

In den Verbindungen der Formeln I und deren Unterformeln bedeuten $R^1$ und $R^2$ jeweils unabhängig voneinander vorzugsweise geradkettiges Alkyl oder Alkoxy mit 1 bis 7 C-Atomen. $R^1$ bedeutet besonders bevorzugt $CH_3$, $C_2H_5$, n-$C_3H_7$, n-$C_4H_9$, n-$C_5H_{11}$, $OCH_3$ oder $OC_2H_5$. $R^2$ bedeutet besonders bevorzugt F, Cl, $CH_3$, $C_2H_5$, n-$C_3H_7$, n-$C_4H_9$, n-$C_5H_{11}$, $OCH_3$ oder $OC_2H_5$.

Ferner bevorzugt sind Verbindungen der Formel I und deren Unterformeln, worin $R^1$ für R'-$Z^1$- und/oder $R^2$ für R"-$Z^5$- steht, wobei R' und R" jeweils unabhängig voneinander Alkyl oder Alkoxy mit 1 bis 12, vorzugsweise mit 1 bis 7 C-Atomen bedeuten, und $Z^1$ und $Z^5$ jeweils unabhängig voneinander -CO-, -CO-O-, -O-CO-, -CONR$^4$- oder -NR$^4$CO- bedeuten. $Z^1$ und $Z^5$ bedeuten vorzugsweise -CO-O- oder -O-CO-. Weitere bevorzugte Verbindungen der Formel I und deren Unterformeln sind solche, worin $R^1$ für R'-CO-O- und/oder $R^2$ für R"-CO-O- stehen, sowie solche, worin $R^1$ für R'-O-CO- und/oder $R^2$ für R"-O-CO- stehen.

$Z^2$, $Z^3$ und $Z^4$ in Formel I bedeuten vorzugsweise -COO-, -OCO- oder eine Einfachbindung, besonders bevorzugt

eine Einfachbindung.

"Beinhalten" oder "umfassen" oder "aufweisen" bedeutet, dass neben den aufgezählten Merkmalen und/ oder Bestandteilen noch weitere Merkmale, Verfahrensschritte und/oder Bestandteile vorhanden sein können, d.h. eine nicht abschließende Aufzählung vorliegt. Im Unterschied hierzu bedeutet "enthalten", dass bei der so charakterisierten Ausführungsform nur die genannten Merkmale, Verfahrensschritte und/oder Bestandteile gegeben sind.

Die Verbindungen der Formel I und deren Unterformeln können nach an sich bekannten Methoden dargestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Weitere geeignete Verfahren zur Herstellung von Verbindungen der Formeln I1 bis I20 sind in der Literatur beschrieben. Verbindungen der Formel I1 bis I5 und ihre Herstellung sind zum Beispiel in EP 0 132 377 A2 beschrieben. Verbindungen der Formel I6 bis I15 und ihre Herstellung sind zum Beispiel in EP 1 346 995 A1 beschrieben. Verbindungen der Formel 116 bis I20 und ihre Herstellung sind zum Beispiel in GB 2 240 778 beschrieben.

Die Verbindungen der Formel I und deren Unterformeln können nach üblichen dem Fachmann geläufigen Verfahren, beispielsweise durch - auch konsekutiv durchführbare - Suzuki-Kreuzkupplung von entsprechenden aromatischen Boronsäuren oder Boronsäureestern mit geeignet substituierten Phenylverbindungen, hergestellt werden. Bevorzugt sind dabei Halogenphenylverbindungen, insbesondere Brom- oder Iodphenylverbindungen.

Im folgenden Schema 1 sind beispielhafte Synthesewege zur Herstellung von Verbindungen der Formel I via Suzuki-Kreuzkupplung skizziert. Dabei haben $R^{21}$, $R^{22}$ und a bis d die oben angegebene Bedeutung, und M steht für Si, Ge oder Sn. Anstelle der Boronsäureester (-B(OAlkyl)$_2$) können auch die entsprechenden Boronsäuren (-B(OH)$_2$) verwendet werden. Die reaktiven Gruppen der Phenylverbindungen (Boronsäure und Halogenid) können auch ausgetauscht werden.

<u>Schema 1:</u>

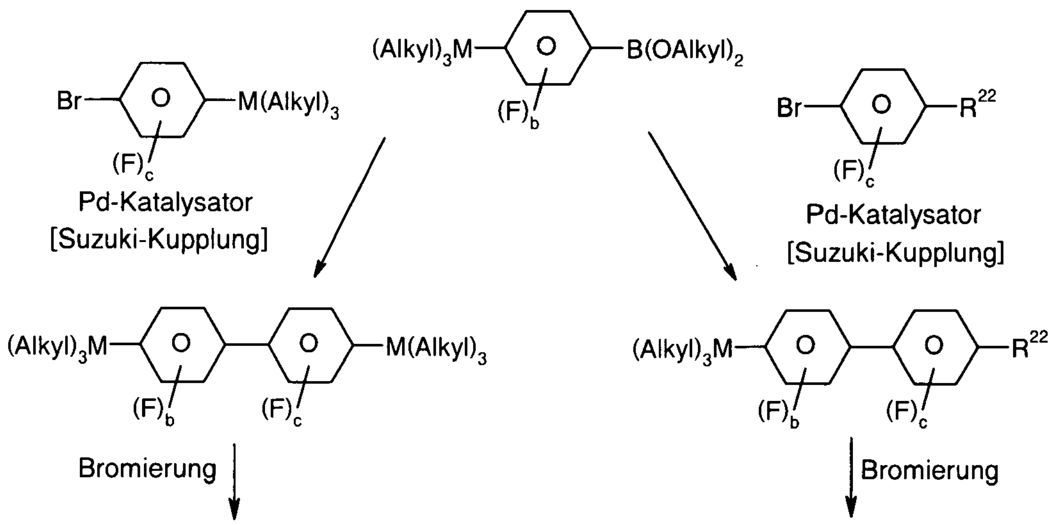

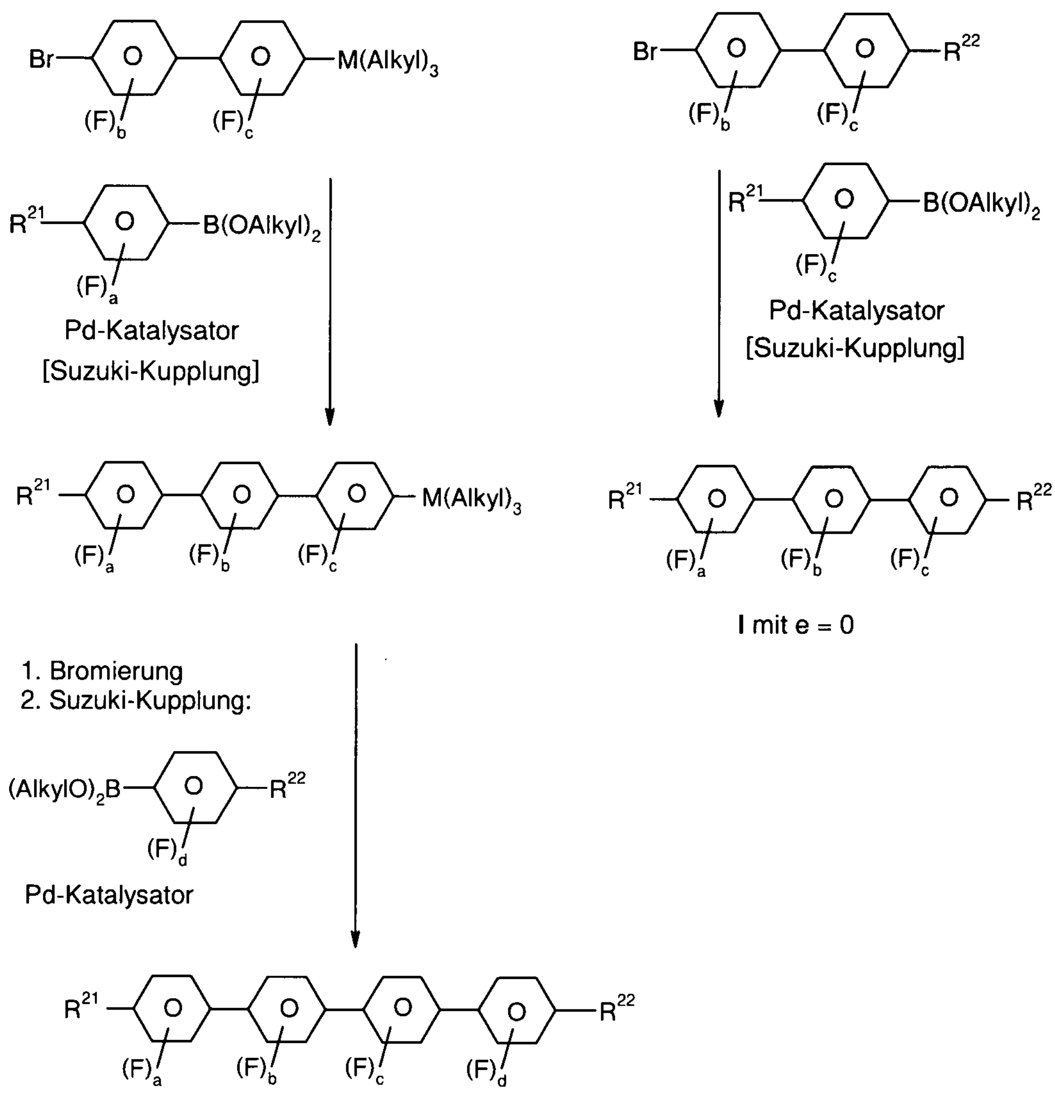


I mit e = 0

I mit e = 1

Verbindungen der Formel I, worin $R^1$ für -CO-O-R' oder -O-CO-R' und/oder $R^2$ für -CO-O-R" oder -O-CO-R" stehen, können beispielsweise auch gemäß Schema 2 oder 3 oder analog dazu hergestellt werden. Darin haben $R^{21}$ und a bis c die oben genannten Bedeutungen und $R^{23}$ bedeutet geradkettiges Alkyl mit 1 bis 12 C-Atomen.

Schema 2:

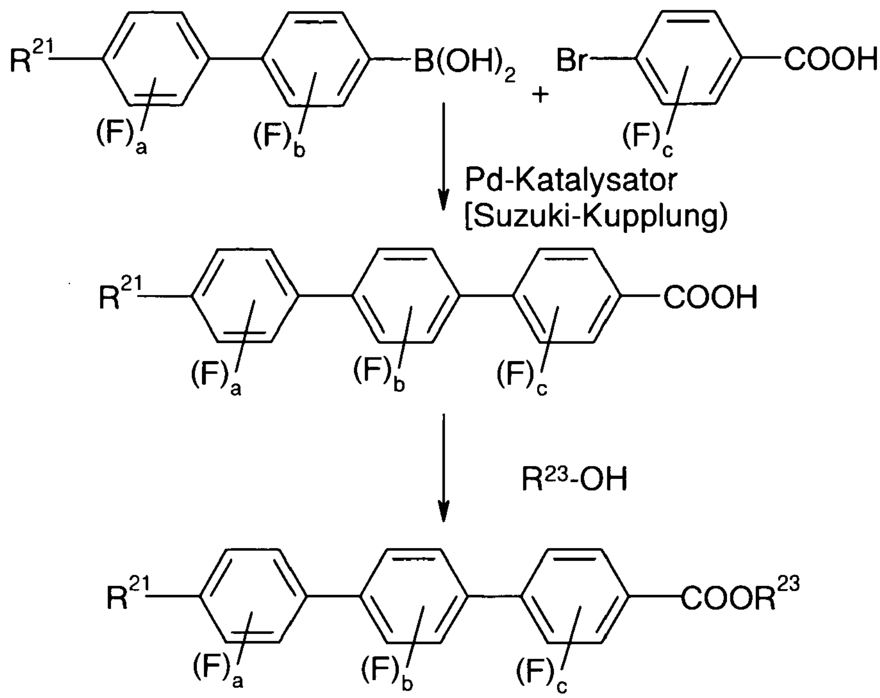


Schema 3:

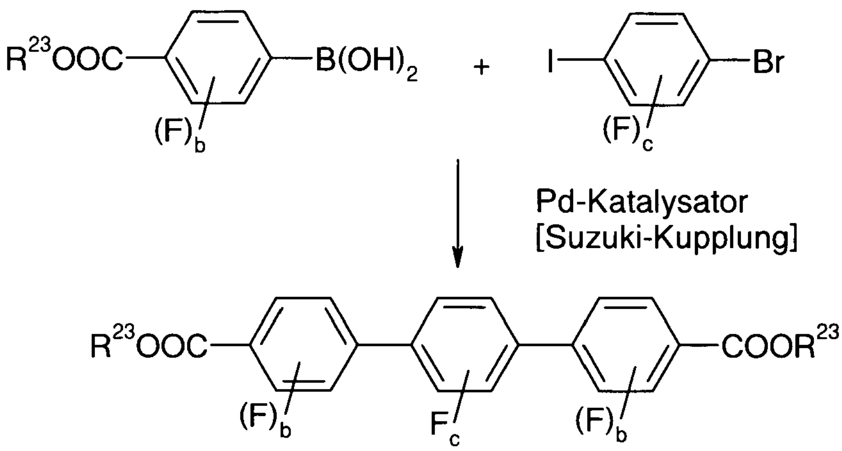


Verbindungen der Formel I, worin $Z^2$, $Z^3$und/oder $Z^4$ für -CO-O- oder -O-CO- stehen, können beispielsweise auch gemäß Schema 4 oder analog dazu hergestellt werden. Dabei haben $R^{21}$, $R^{22}$ und a bis c die oben angegebenen Bedeutungen.

Schema 4:

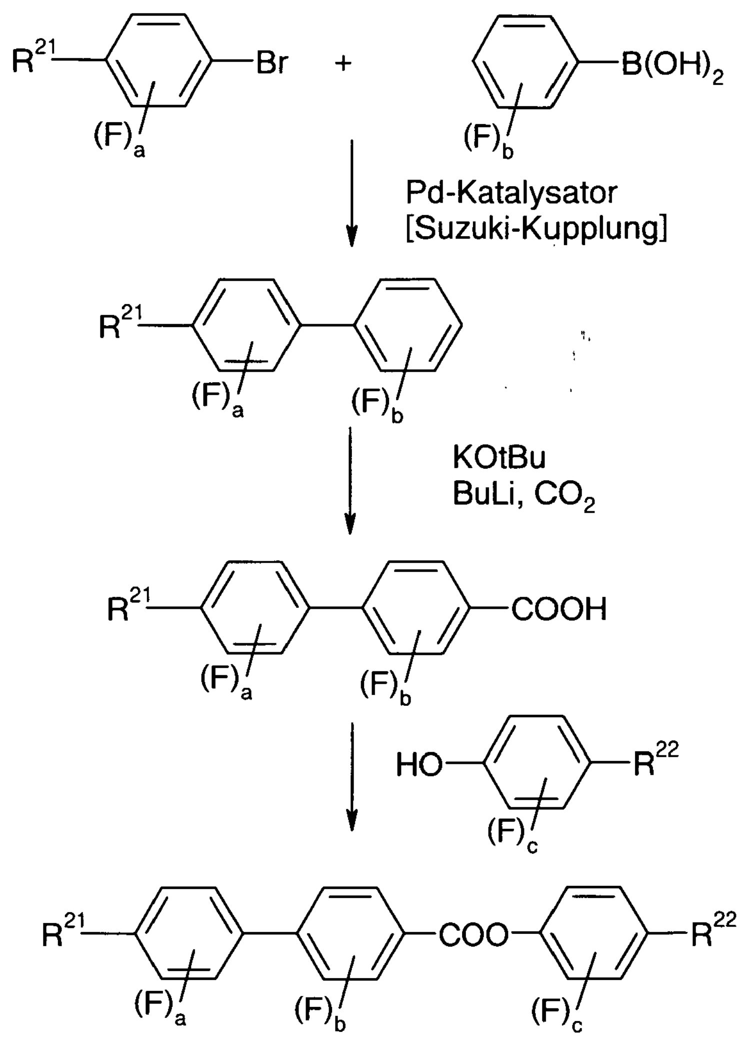


Es ist erfindungsgemäß beispielsweise in einer möglichen bevorzugten Ausführungsform der Erfindung denkbar, dass zwei (oder auch mehr) Kompensationsfolien pro Flüssigkristallzelle bzw. Flüssigkristalldisplay eingesetzt werden, oder in einer möglichen bevorzugten Ausführungsform nur eine.

Im ersteren Falle wird die erfindungsgemäße Kompensationsfolie vorzugsweise für die Kompensation einer VA-Flüssigkristallanzeige (vertically aligned) eingesetzt, dafür liegt bei zwei verwendeten Kompensationsfolien der Bereich der Retardation für jede der Folien von Ro vorzugsweise bei 30 bis 70, insbesondere bei 40 bis 60 nm, der von Rth vorzugsweise bei 100 bis 160, insbesondere von 120 bis 140 nm, im Falle von nur einer Kompensationsfolie für die VA-Anzeige für Ro vorzugsweise bei 30 bis 70, insbesondere 40 bis 60 nm und der von Rth vorzugsweise bei 190 bis 250 nm, insbesondere von 210 bis 230 nm (bevorzugte Retardationswerte, bevorzugte Retardationsbereiche).

Beim erfindungsgemäßen Verfahren zur Herstellung einer Kompensationsfolie für eine Flüssigkristallanzeige wird beispielsweise in einer möglichen bevorzugten Ausführungsform wie folgt vorgegangen:

Eine weitere Ausführungsform der Erfindung betrifft ein Verfahren zur Herstellung von optischen Kompensationsfolien der erfindungsgemäßen Art (wie vor- und nachstehen oder in den Ansprüchen definiert), wobei man mindestens eine Verbindung der Formel I dem bei der Herstellung der Kompensationsfolien verwendeten Gemisch im Rahmen

eines üblichen Verfahrens zum Herstellen derartiger Folien zusetzt.

Vorzugsweise werden (in einem Ansatz oder vorzugsweise schrittweise, z.B. unter Verwendung von (beispielsweise unter Rühren oder Dispergieren) vorgefertigten Lösungen von Komponenten, wie dem Celluloseester (Zelluloseacylat), insbesondere CAP- oder vorzugsweise Zelluloseacetat, dem oder den Weichmachern und gegebenenfalls einem oder mehreren Additiven und deren Vermischung, die Bestandteile der verwendeten Mischung (bei einem Foliengießverfahren in einem Lösungsmittel- oder Lösungsmittelgemisch) angesetzt, und dann mittels eines üblichen Verfahrens, vorzugsweise des "Solution-Casting-" (= Foliengieß-)Verfahrens, auf einer entsprechenden Foliengieß-Maschine unter kontrolliertem Ausbreiten auf einen geeigneten Untergrund, wie ein Metallband (z.B. aus Stahlfolie), und kontrolliertem Trocknen zu einer Kompensationsfolie gemäß der Erfindung verarbeitet, vorzugsweise nach bekannten Verfahren, wie beispielsweise in der US 2005/0045064 A1 beschrieben, die hier diesbezüglich durch Bezugnahme aufgenommen wird.

Besonders vorteilhaft ist, dass angesichts der guten Löslichkeit der Verbindungen der Formel I in den verwendeten Lösungsmitteln/Lösungsmittelgemischen die Zugabe dieser Verbindungen auch in Form von gegenüber der Endkonzentration eine erhöhte Konzentration davon aufweisenden Konzentraten durchgeführt werden kann - dies ist eine bevorzugte Variante der Herstellung. Beispielsweise kann die Verbindung oder können die Verbindungen der Formel I in einer gegenüber der Endkonzentration um den Faktor 1,05 bis 10, wie 1,3 bis 5, konzentrierten Lösung (die auch weitere Zusätze beinhalten kann) zugesetzt werden, beispielsweise in-line (in die Pumpleitung) unter Verwendung geeigneter Mischer, wie statischer Mischer.

Als Lösungsmittel oder Lösungsmittelgemische kommen vorzugsweise cyclische oder acyclische Ester, Ketone oder Ether mit jeweils 3 bis 12 Kohlenstoffatomen, oder geeignete halogenierte (insbesondere chlorierte) Lösungsmittel in Betracht, wie insbesondere Dichlormethan oder Chloroform, vorzugsweise in einem Gemisch mit einem linearen, verzweigten oder cyclischen Alkohol, insbesondere Methanol, wobei der Alkohol auch fluoriert sein kann. Vorzugsweise wird ein Gemisch aus einem chlorierten Kohlenwasserstoff, wie insbesondere Methylenchlorid, und einem Alkohol, insbesondere Methanol, verwendet. Bei Mischungen von einem der genannten nichtalkoholischen und einem der genannten alkoholischen Lösungsmittel liegt deren Volumenverhältnis vorzugsweise bei 75 zu 25 bis 95 zu 5, beispielsweise bei 90 zu 10 (nichtalkoholisches Lösungsmittel zu alkoholisches Lösungsmittel, v/v).

Vorzugsweise findet anschließend eine Reckung statt, um die Retardation Ro und Rth jeweils gut im bevorzugten Bereich einstellen zu können (und vorzugsweise zugleich die virtuelle Verzerrung zu vermindern). Die Reckung findet dabei monoaxial, ohne oder vorzugsweise mit Halten senkrecht zur Reckungsrichtung, statt, oder vorzugsweise biaxial, um die Verzerrung in allen Richtungen zu vermindern. Die Reckung liegt vorzugsweise im Bereich von 1 bis 100 % (1,01- bis 2-fache Reckung), beispielsweise in einer bevorzugten Ausführungsform der Erfindung im Bereich von 3 bis 40 % (1,03- bis 1,4-fache Reckung), bezogen auf die ursprüngliche Länge bzw. Breite der Kompensationsfolie. Die biaxiale Reckung kann gleichzeitig oder in getrennten Schritten ausgeführt werden. Die vom Band abgezogene Kompensationsfolie wird beispielsweise erst longitudinal und dann lateral gereckt und danach vollständig getrocknet, oder bei nichtkontinuierlicher Produktion der zunächst vollständig getrockneten und aufgewickelten Folie in einem separaten Arbeitsschritt beispielsweise erst longitudinal und dann lateral oder simultan gereckt.

Die Folie wird bei Raumtemperatur oder vorzugsweise dieser gegenüber erhöhten Temperaturen gereckt, wobei die Temperatur vorzugsweise nicht höher ist als die Glasübergangstemperatur des Folienmaterials. Die Folie kann unter trockenen Bedingungen gereckt werden. Zum longitudinalen Recken kann die Folie durch Rollen gereckt werden, beispielsweise, indem die Geschwindigkeit des Abziehens langsamer ist als die des Aufrollens, und ohne oder vorzugsweise mit lateraler Haltung (beispielsweise durch Kluppen). Alternativ kann eine separate Reckung in einer Reckungsmaschine vorgenommen werden.

Um eine gute Kombinierbarkeit mit einem Klebemittel für die Laminierung von Polarisator-Schichten (insbesondere auf PVA-Basis) zu erreichen (vor allem verbesserte Adhäsion), wird die erhaltene Schutzfolie vorzugsweise in einem weiteren Schritt teilweise hydrolysiert, um an der Oberfläche die Hydrophilie zu erhöhen, beispielsweise mittels einer wässrigen Base, wie einem Alkalimetallhydroxid, insbesondere KOH oder NaOH, bei Temperaturen im Bereich von 0 bis 80 °C, z.B. bei etwa 50 °C, wobei die Hydrolyse beispielsweise 0,1 bis 10 Minuten, in einer möglichen bevorzugten Variante z.B. 1 bis 3 Minuten, dauern kann. Es folgen ein oder mehrere Waschschritte, z.B. mit Wasser geeigneter Reinheit, und eine Trocknung.

Die Folie kann dann ggfs. nach dem Aufbringen von Klebe- und Schutzschichten und ggf. nach Schneiden in flacher Form oder in aufgerollter Form aufbewahrt werden.

Eine erfindungsgemäße Polarisatorplatte beihaltet zwei transparente Schutzfolien und dazwischen eine Polarisatormembran. Eine erfindungsgemäße optische Kompensationsfolie kann als eine der Schutzfolien verwendet werden, oder auf eine der Schutzfolien aufgebracht werden. Eine herkömmliche Zelluloseacylat-, insbesondere Zellulose-$C_1$-$C_7$-Alkanoat-, insbesondere CAP- oder vorzugsweise Zelluloseacetat-Folie kann als die andere Schutzfolie (oder für beide Schutzfolien) verwendet werden.

Als Polarisationsmembran können beispielsweise iodhaltige Polarisationsmembranen, polyen-basierte Polarisationsmembranen oder dichroitische Farbstoffe beinhaltende Polarisationsmembranen verwendet werden. Iodhaltige

und die Farbstoffe beinhaltenden Polarisationsmembranen werden für gewöhnlich aus Polyvinylalkohol-Folien hergestellt. Die Transmissionsachse der Polarisatormembran wird im wesentlichen senkrecht zur Reckrichtung der erfindungsgemäßen Folie platziert.

Die langsame Achse der Kompensationsfolie kann im wesentlichen senkrecht oder im wesentlichen parallel zur Transmissionsachse der Polarisatormembran ausgerichtet werden.

Bei der Herstellung der Polarisatorplatte werden die Polarisatormembran und die Schutzfilme (in der Regel) mit einem wässrigen Klebemittel laminiert, wofür die Schutzfilme (von denen ja vorzugsweise direkt einer eine erfindungsgemäße Kompensationsfolie sein kann) vorzugsweise wie oben beschrieben an der Oberfläche verseift werden.

Bei der Herstellung zirkular polarisierender Polarisatorplatten kann eine erfindungsgemäße Kompensationsfolie auch so platziert werden, dass die langsame Achse der Kompensationsfolie im wesentlichen im Winkel von 45 Grad zur Transmissionsachse der Membran ausgerichtet ist (bei "im wesentlichen senkrecht" also abweichend vom rechten Winkel, bei "im wesentlichen parallel" abweichend von 0°).

"Im wesentlichen" bedeutet vorzugsweise, dass ein vorstehend genannter Winkel um 5 Grad, beispielsweise um 4 Grad, insbesondere um 2 Grad, von einem oben genannten Winkel abweichen kann.

Die Dicke einer erfindungsgemäßen Kompensationsfolie liegt vorzugsweise im Bereich von 20 bis 150 $\mu$m, insbesondere von 30 bis 100 $\mu$m.

Zur Herstellung einer Flüssiganzeige werden nach üblichen Verfahren zwei wie oben hergestellte Polarisationsplatten mit insgesamt ein oder zwei erfindungsgemäßen Kompensationsfolien zur Herstellung von Flüssigkristallanzeigen des Transmissions- oder des Reflektionstyps verwendet. Die erfindungsgemäße(n) Kompensationsfolie(n) wird oder werden dabei zwischen einer der Flüssigkristallzelle und einer oder den beiden Polarisatorplatten platziert.

Die Flüssigkristallzellen arbeiten dabei vorzugsweise nach dem VA ("Vertically Aligned", einschließlich MVA = "multidomain VA")-, OCB ("Optically Compensated Bend")- oder TN ("Twisted Nematic", einschließlich STN = "Super Twisted Nematic", DSTN = "Double Layer STN"-Technologie, oder HAN = "Hybrid Aligned Nematic")-Prinzip (das VA-Prinzip wird besonders häufig in grossen TFT-Flüssigkristallanzeigen eingesetzt und ist deshalb besonders bevorzugt), oder auch nach dem IPS-Prinzip ("In Plane Switching" = Feld parallel zur Oberfläche der Anzeige).

LCD steht für Liquid Crystal Display - ein Bildschirm auf Grundlage der Flüssigkristalltechnik. Hintergrundlicht wird dabei durch einen Polarisationsfilter linear polarisiert, passiert eine Flüssigkristallschicht, die, z.B. in Abhängigkeit von der gewünschten Helligkeit, die Polarisationsebene des Lichtes dreht, und tritt durch einen zweiten Polarisationsfilter wieder aus. Zusammen mit Treiberelektronik, Farbfiltern und Glasscheiben bilden diese Komponenten das sogenannte "Panel".

TFT (Thin Film Transistor) bezeichnet die heute bei Desktop-Monitoren und Notebooks übliche Aktivmatrix-Variante der LCD-Panels, bei der jedes Pixel durch einen eigenen Transistor angesteuert wird. Im Unterschied dazu besitzen Passivmatrix-Displays nur am Rand Steuerelektronik, die einzelnen Pixel werden zeilen- und spaltenweise geschaltet. Sie sind deshalb deutlich träger im Bildaufbau und werden wegen ihres geringeren Stromverbrauchs vornehmlich in Kleingeräten wie Mobiltelefonen, tragbaren digitalen Videogeräten oder MP3-Playern eingesetzt. Die Begriffe LCD- und TFT-Monitor werden, obwohl streng genommen unterschiedlich, mittlerweile oft synonym verwendet.

Die Paneltypen unterscheiden sich im wesentlichen durch die Art der Ausrichtung der Flüssigkristalle zwischen den Substraten der Flüssigkristallzelle. In TN-Panels (Twisted Nematic) sind die Flüssigkristallmoleküle ohne elektrisches Feld parallel zur Oberfläche der Substrate ausgerichtet, wobei ihre Vorzugsrichtung in Richtung senkrecht zur Oberfläche eine helikale Verdrillung aufweist, und richten sich bei angelegter Spannung in Richtung des senkrecht zur Oberfläche anliegenden elektrischen Feldes aus. Sie zeigen eine vergleichsweise hohe Blickwinkelabhängigkeit, die mit Kompensationsfolien nur teilweise reduziert werden kann. Sie zeigen nicht sehr schnelles Schaltverhalten.

Beim In-Plane Switching (IPS) sind die Flüssigkristallmoleküle parallel zur Substratoberfläche, aber unverdrillt, ausgerichtet. Die Flüssigkristallzelle weist nur auf einem der Substrate eine Elektrodenschicht auf. Dadurch wird bei Anlegen einer Spannung ein elektrisches Feld in Richtung parallel zur Substratoberfläche erzeugt, welches die Flüssigkristallmoleküle innnerhalb der Panelfläche umorientiert. Der Kontrast ist dadurch wesentlich weniger blickwinkelabhängig als bei TN-Panels. Allerdings wurde erst durch die verbesserte S-IPS- und Dual-Domain-IPS-Technik auch die Blickwinkelabhängigkeit der Farbdarstellung verkleinert. Durch die schwachen Felder waren die Schaltzeiten anfangs sehr lang, aktuelle Varianten können aber durchaus mit schnellen VA-Panels mithalten.

Die Flüssigkristallmoleküle in VA-Panels (Vertically Aligned) sind im feldlosen Zustand weitgehend senkrecht zur Substratoberfläche ausgerichtet, und besitzen eine negative dielektrische Anisotropie, so dass sie beim Anlegen des elektrischen Feldes zwischen den Substraten in eine Richtung parallel zur Ooberfläche umorientiert werden. Da VA-Panels ohne angelegte Spannung kein Licht durchlassen, erreichen sie ein tiefes Schwarz und damit sehr hohe Kontrastwerte. Subtypen umfassen MVA (Multi-Domain VA), PVA (Patterned VA) und ASV (Advanced Super View). Diese unterteilen die Zellen zusätzlich in Bereiche mit unterschiedlicher Vorzugsrichtung und erzielen dadurch eine große Blickwinkelstabilität. VA Panel zeichnen sich insbesondere durch kurze Umschaltzeiten aus, so dass sie und ihre Herstellung im Rahmen der Erfindung bevorzugt sind.

Geeignete Anordnungen sind dem Fachmann bekannt, die in der vorliegenden Anmeldung in der Einleitung,

in der übrigen Beschreibung oder in den Zeichnungen und Ansprüchen genannten Varianten sind nur exemplarisch zu verstehen und sollen den Umfang der Erfindung nicht beschränken.

Einer Kompensationsfolie gemäß der Erfindung können weitere (beispielsweise bei der Herstellung der Lösung oder der Dispersion der Komponenten zugesetzte) Additive zugesetzt werden oder sein, wie Weichmacher, Dispersionsmittel, Pigmente, Farbstoffe (bevorzugt), , UV-Absorber, Füllstoffe, anorganische Polymere, organische Polymere, Antischaummittel, Schmiermittel, Antioxidantien (wie gehinderte Phenole, gehinderte Amine, phosphorbasierte Antioxidantien, schwefelbasierte Antioxidantien, Sauerstofffänger oder dergleichen, beispielsweise in einer Menge von 0,1 bis 10 Gew.-%), Säuvon 0,1 bis 10 Gew.-%), Radikalfänger, Mittel zur Erhöhung der elektrischen Leitfähigkeit, Verdickungsmittel, Antibleichmittel, Konservierungsmittel, chemische Stabilisatoren wie sterisch gehinderte Amine (wie 2,2,6,6-Tetraalkylpiperidine) oder Phenole, IR-Absorber, Mittel zur Einstellung des Brechungsindex, gasdurchlässigkeitsvermindernde Agentien, wasserdurchlässigkeitsvermindernde Mittel, antimikrobielle Agentien, Antiblockiermittel (besonders bevorzugt, auch als Mattierungsmittel bezeichnet), welche beispielsweise eine gute Trennbarkeit aufeinandergelegter Schutzfilme ermöglichen, z.B. (Halb-)Metalloxide, wie Siliciumdioxid, Titandioxid, Aluminiumoxid, Zirconiumoxid, Calciumcarbonat, Kaolin, Talkum, kalziniertes Kalziumsilikat, hydratisiertes Kalziumsilikat, Aluminiumsilikat, Magnesiumsilikat oder Kalziumphosphat, kleine anorganische Partikel basierend auf Phosphorsäuresalzen, Kieselsäuresalzen der Carbonsäuresalzen, oder kleine vernetzte Polymerpartikel, beispielsweise in einer Menge von 0,001 bis 5 Gew.-%, andere als die bereits genannten Stabilisatoren oder dergleichen, oder Mischungen von zwei oder mehr solcher Additive. Dem Fachmann sind derartige Additive für die Zwecke der Herstellung von Kompensationsfolien für Polarisatoren in Flüssigkristallanzeigen geläufig. Die Gesamtmenge aller verwendeten derartigen weiteren Additive liegt vorzugsweise bei 0,1 bis 25 Gew.-%. Gew.-%-Angaben beziehen sich dabei vorstehend jeweils auf die Masse des Kompensationsfolienmaterials.

Als Weichmacher kommen übliche Weichmacher in Betracht, wie aliphatische Dicarbonsäureester, z.B. Dioctyladipat, Dicyclohexyladipat oder Diphenylsuccinat, Ester und/ oder Carbamate ungesättigter oder gesättigter ali- oder heterocyclischer Di- oder Polycarbonsäuren, wie Di-2-naphthyl-1,4-cyclohexandicarboxylat, Tricyclohexyltricarbamat, Tetra-3-methylphenyltetrahydrofuran-2,3,4,5-tetracarboxylat, Tetrabutyl-1,2,3,4-cyclopentantetracarboxylat, Triphenyl-1,3,5-cyclohexyltricarboxylat, 1,2-Cyclohexandicarbonsäurediisononylester, Triphenylbenzol-1,3,5-tetracarboxylat, phthalsäurebasierte Weichmacher außer denen der Formal I, wie Diethyl-, Dimethoxyethyl-, Dimethyl-, Dioctyl-, Dibutyl-, di-2-ethylhexyl- oder Dicyclohexylphthalat, Bis(2-propylheptyl)phthalat, Dicyclohexylterephthalat, Methylphthalyl-methylglykolat, Ethylphthalyl-ethylglykolat, Propylphthalyl-propylglykolat, Butylphthalyl-butylglykolat, Glycerinester, wie Glycerintriacetat, zitronensäurebasierte Weichmacher wie Acetyltrimethylcitrat, Acetyltriethylcitrat oder Acetylbutylcitrat, polyetherbasierte Weichmacher, oder vorzugsweise (wegen verbesserter bis insbesondere hin zu synergistischer Wirksamkeit mit den Weichmachern der Formel I, aber auch aus Gründen der Umweltverträglichkeit und der guten Verarbeitbarkeit, phosphorsäureesterbasierte Weichmacher wie Triphenylphosphat (sehr bevorzugt), Trikresylphosphat, Biphenyldiphenylphosphat, Butylenbis(diethylphosphat), Ethylen-bis(diphenylphosphat), Phenylen-bis(dibutylphosphat), Phenylen-bis(diphenylphosphat), Phenylen-bis(dixylenylphosphat), Bisphenol A-diphenylphosphat, Diphenyl-(2-ethylhexyl)-phosphat, Octyldiphenylphosphat oder Triethylphosphat.

Der Gesamtanteil an Weichmacher in einer erfindungsgemäßen Kompensationsfolie liegt, bezogen jeweils ihre Masse, vorzugsweise im Bereich von 5 bis 15 Gew.-%, insbesondere im Bereich von 8 bis 13 Gew.-%, beispielsweise bei 10 bis 12 Gew.-%.

UV-Absorber sind aus üblichen UV-Absorbermaterialien ausgewählt, die vorzugsweise im Bereich der UV-A, UV-B und UV-C-Strahlung absorbieren (und vorzugsweise im sichtbaren Bereich oberhalb von 400 nm Wellenlänge der elektromagnetischen Strahlung nicht mehr als 10 % Absorption, vorzugsweise nicht mehr als 0,5 % Absorption, insbesondere nicht mehr als 0.2 % Absorption aufweisen). Beispiele hierfür sind:

Als übliche UV-Absorbermaterialien finden vorzugsweise Tinuvin 326 ® (2-tert-Butyl-6-(5-chloro-benzotriazol-2-yl)-4-methyl-phenol = 2-(5-Chlor(2H)-benzotriazol-2-yl)-4-(methyl)-6-(tert-butyl)phenol = "Bumetrizole") oder Tinuvin 327 ® (2,4-di-tert-Butyl-6-(5-chlorbenzotriazol-2-yl)-phenol), beide von Ciba Specialty Chemicals AG, Basel, Schweiz, Uvinul 3049 ® (2,2-Dihydroxy-4,4-dimethoxybenzophenon; BASF AG, Ludwigshafen, Deutschland), Uvinul D-50 ® (2,2',4,4'-Tetrahydroxybenzophenon; BASF AG) oder Gemische von zwei oder mehr dieser UV-Schutz-Zusätze, oder insbesondere Tinuvin 326 ® alleine Verwendung.

IR-Absorber können einer Kompensationsfolie beigemischt werden zur Anpassung der Retardationswerte bei bestimmten Wellenlängen, beispielsweise in einer Menge von 0.01 bis 5 Gewichtsprozent, vorzugsweise 0.02 bis 2 Gewichtsprozent, sehr bevorzugt von 0.1 bis 0.5 Gewichtsprozent bezogen auf die Masse der Kompensationsfolie. Beispiele für entsprechende IR-Absorber sind anorganische oder vorzugsweise organische IR-Absor ber, wie Cyaninfarbstoffe, Metallchelate, Aluminiumverbindungen, Diimmoniumverbindungen, Chinone, Squariliumverbindungen und Methinverbindungen, insbesondere Materialien aus dem Bereich der photosensitiven Materialien aus der Silberhalid-Photographie. IR-Absorber zeigen vorzugsweise eine Absorption im Bereich von 750 bis 1100 nm, insbesondere von 800 bis 1000 nm.

Bevorzugte Ausführungsformen der Erfindung ergeben sich aus den Ansprüchen und insbesondere den unabhängigen Ansprüchen, weshalb die Ansprüche hier durch Bezugnahme in die Beschreibung aufgenommen werden.

Besonders bevorzugte Ausführungsformen der Erfindung beziehen sich auf optische Kompensationsfolien, welche eine oder mehrere der in den Beispielen genannten Verbindungen der Formel I beinhalten, vorzugsweise mono- oder insbesondere biaxial gereckte Kompensationsfolien, welche insbesondere die vorstehend als bevorzugt genannten Reckungsverhältnisse aufweisen; wobei die Retardationswerte Ro und Rth vorzugsweise auf die vorstehend als bevorzugt genannten Werte eingestellt sind.

Beschreibung der Zeichnungen:

Fig. 1 zeigt Ro- und Rth-Werte erfindungsgemäßer Kompensationsfolien bei verschiedenen Reckungen - die elliptisch angegebenen bevorzugten Zielbereiche für Ro und Rth sind eigentlich als innerhalb der maximalen Ausdehnung der Ellipsen senkrecht zu deren Längsachse liegend zu denken, doch wurden keine Rechtecke eingezeichnet, da diese schlechter zu erkennen wären. Sie sind auch nicht zwingend limitierend. Beide beziehen sich auf ein Konzept für die Konstruktion von Flüssigkristallanzeigen, bei dem zwei Kompensationsfolien verwendet werden (alternativ kann auch eine verwendet werden, wobei dann die sehr bevorzugten Rth-Werte im oben in der Beschreibung angegebenen Bereich liegen).

Fig. 2 zeigt zur Veranschaulichung ein mögliches, nicht limitierendes Beispiel für den Aufbau einer Flüssigkristallanzeige (schematisch im Querschnitt als Ausschnitt). 1 = Analysator (Polarisatorplatte); 2 = biaxiale Kompensationsfolie mit langsamer Achse in der Folienebene und parallel zur Papierebene; 3, 4 und 5 Flüssigkristallzelle; 6 biaxiale Kompensationsfolie mit langsamer Achse in der Folienebene und senkrecht zur Papierebene; und 7 = Polarisatorplatte.

Die nachfolgenden Beispiele illustrieren die Erfindung, ohne ihren Umfang einzuschränken:

Soweit nicht explizit anders vermerkt, sind in der vorliegenden Anmeldung alle angegebenen Werte für Temperaturen, wie zum Beispiel der Schmelzpunkt T(C,N), der Übergang von der smektischen Temperatur (S) zur nematischen (N) Phase T(S,N) und der Klärpunkt T(N,I), in Grad Celsius (°C) angegeben. Fp. bedeutet Schmelzpunkt, Kp. Klärpunkt. Ferner bedeiten K = kristalliner Zustand, N = nematische Phase, S = smektische Phase und I = isotrope Phase. Die Angaben zwischen diesen Symbolen stellen die Phasenübergangstemperatur in °C dar.

Beschreibung verwendeter Mess- und Arbeitsmethoden:

A) <u>Bestimmung der opt. Retardation von transparenten Folien (Rth- und Ro-Wert)</u>

Verwendet wird ein Doppelbrechungs-Messgerät Exicor 150 AT der Firma Hinds Instruments, Inc., Hillsboro, OR, USA.

a) Probenvorbereitung

Aus einem Streifen Folie (über die Breite) werden 3 Muster Links / Mitte / Rechts herausgeschnitten, dabei die Gießrichtung (MD) in einer Ecke des Musters markiert. Während der Probenahme, deren Vorbereitung, aber auch über den gesamten Messvorgang hinweg, ist insbesondere darauf zu achten, dass die Folie vor Verunreinigungen wie Schmutz, Staub etc. und vor allem vor Verkratzung geschützt wird. Solche Defekte können negative Auswirkungen auf das Messergebnis haben.

b) Messung

Die Proben werden einzeln auf den Kipptisch gelegt und vorerst so orientiert, dass die Gießrichtung senkrecht zu den Auflagedrähten ist. Die Probe wird mit einer Alu-Platte (mit 2 Aussparungen) abgedeckt. Dabei muss das kleinere, runde Loch frei von Folie sein. Der Winkel ("angle") muss bei Gießfolien 0 ± 1 ° und bei Handgüssen 0 ± 3° betragen, um dies zu erreichen, dreht man die Folie so, bis man durch weitere Messungen den gewünschten Winkel erreicht hat. Bei größerer Streuung der Winkel (vor allem bei Handgüssen) kann über die Einstellung: <Graph type normal, Retardation angle -> Statistics -> Angle -> Mean> der Winkelmittelwert kontrolliert werden. Es muss so lange gemessen werden, bis der Mittelwert (mean) bei Gießfolien 0±1° oder bei Handgüssen 0 ± 3° beträgt. Der Folienrand kann mit Klebestreifen am Auflagedraht fixiert werden, um ein Verrutschen/Verdrehen der Probe vor Beginn der eigentlichen Messung zu verhindern. Um ganz sicher zu gehen, kann man alternativ den eigentlichen Messfleck auch markieren. Der Messfleck ist die rechteckige mittlere Aussparung. Vor der Messung muss der Brechungsindex (Refractive-Index) bekannt sein. Der Brechungsindex kann über <Configuration ® System Parameters ® Sample-Refractive-Index > geändert werden.

Nach der ersten Teilmessung geht ein Fenster auf: "ready to scan oblique angle", <mit Winkelanzeige auf 30°>,

dann den Kipptisch auf 30° einstellen und mit "ok" bestätigen, die Messung wird fortgesetzt. Wenn die Messung beendet ist, kann der Ro Wert über: Graph type "normal" und "retardation Mag. and angle" abgelesen werden <, der Ro-Mittelwert über Statistics -> Magnitude/Mean>. Den R30 Wert kann man über "Graph type" und "oblique" - retardation Mag. and Angle"→ statistics -<Mean> ablesen. Den Rth Wert kann man mit folgender Formel berechnen: (VBR + IBR/2) * d *1000 oder über die Tabelle "Berechnung Rth", diese befindet sich auf dem Desktop(Bildschirm) des Rechners des Exicor 150 AT.

c) Genauigkeit der Methode

Messbereich: 0 - 700 nm; Reproduzierbarkeit: ± 0-3 nm(R0 <30 nm) oder ± 1% (R0 >1 nm); Messgenauigkeit/ Auflösung: 0,1 nm

d) Ergänzende Angaben

Kalibrierung: einmal pro Tag bzw. nach jedem Neustart von Gerät, PC oder Software werden mit einer Luft-Messung(dabei darf sich keine Folie oder sonstiges auf dem Kipptisch befinden) über <System Parameters®Sample®Update Offsets> in die Grundeinstellung gesetzt. Der Retardationswert sollte bei der Luft-Messung 0,00xx betragen. Einmal pro Woche wird zusätzlich mit dem Hinds-Standard (Folienstreifen in schwarzem Halter) das Gerät überprüft. Dazu wird der Standard auf den Kipptisch gelegt und die Messung gestartet. Es sollte sich ein Wert von 12,5 ± 1 nm ergeben.

B) Bestimmung der Haltbarkeit (Durability)

Die Durabilitytests werden bei 60°C/95 % rel. Feuchte im Klimaschrank bzw. bei 80°C im Trockenschrank bei niedriger relativer Feuchte über 500 h oder 1000 h durchgeführt.

a) Messungen:

(i) Dickenmessung: Die Dicke des jeweiligen Handgusses wird durch Messung mittels eines Dickentasters mit einer plan geschliffenen und einer kugelförmigen Messfläche in Anlehnung an DIN 53379 gemessen, wobei vor der Messung der Probenkörper auf Verunreinigungen (wie Staub) geprüft wird, darauf geachtet wird, dass keine Wölbung einen Messfehler verursacht und die obere Messfläche stoßfrei aufgesetzt wird. Vor und nach jeder Messung wird der Nullpunkt des Messgeräts kontrolliert. Messpunkte haben einen Abstand von 2 - 3 cm. Die Dicke des Probenkörpers wird als arithmetisches Mittel von 5 Einzelmessungen je Probe angegeben.

(ii) Vorschrift für Messung von Haze und Transmission:
Zur Messung trifft ein Lichtbild auf eine Probe und tritt in eine integrierte Kugel ein. Das von der mattweißen Beschichtung der Kugelwand gleichmäßig verteilte Licht wird in einem Detektor gemessen. Die Gesamttransmission wird bei geschlossenem, die Trübung (Haze) bei geöffnetem Kugelausgang ermittelt. Ein Ringsensor in der Austrittsöffnung misst die Bildschärfe. Konkret erfolgt die Messung mit einem Gardener BYK Haze-Guard plus 4725-Gerät (Byk-Gardner GmbH, Geretsried, Deutschland). Die Probe wird senkrecht beleuchtet und das durchgelassene Licht in der integrierten Kugel fotoelektrisch gemessen (=°/diffus-Geometrie). Die spektrale Empfindlichkeit ist an die CIE-Normspektralwertfunktion y unter Normlicht C angepasst. Das Messgerät entspricht den Normen ASTM D-1003 (Standard Test-Methode für Haze und Licht-Durchlässigkeit transparenter Kunststoffe) und ASTM-D 1044 (Standard-Testmethode zum Widerstand transparenter Kunststoffe gegen Oberflächen-Abrasion).

(iii) optische Beurteilung der Oberfläche (Migration der Additive etc)

(iv) Ro und Rth Messung wie vorstehend.

(v) Durchführung
Für die Messungen werden von jedem Muster 2*5 cm große Proben (10 $cm^2$) herausgeschnitten und unter den oben genannten Bedingungen vermessen. Die Probe ist immer in der gleichen Weise in das Photometer einzusetzen, so dass der Messpunkt über die Dauer des Durabilitytests immer der Gleiche ist.

Nach der optischen Beurteilung der Oberfläche der Handgüsse wird mit dem Gardener-Gerät Trübung/Haze

und Transmission gemessen und der Messfleck eingezeichnet. Die Bestimmung der Ro und Rth Werte erfolgt auch in diesem Messfleck.

Dann werden die 2*5 cm großen Proben in den Klimaschrank bzw. den Trockenschrank gehängt und die Messungen nach ca. 100, 200, 300, 400, 500 und ggf. 1000 h wiederholt. Die Trübungs/Transmissionsmessungen erfolgen immer an dem eingezeichneten Messfleck.

C) Recken der Folien

Verwendet wird eine Laborreckmaschine KARO 4 der Firma Brückner Maschinenbau GmbH, Siegsdorf, Deutschland.

a) Musterherstellung

Die nachfolgend beschriebenen Handgüsse werden in 85 x 85 mm große Quadrate oder die bei den jeweiligen Beispielen genannten Größen geschnitten. Diese werden genau in der Mitte des Quadrats durch die unten genannten Messungen charakterisiert. Die Beschreibung der Messmethoden findet sich, soweit nicht nachfolgend dargelegt, oben.

b) Messungen an den gereckten Mustern: Folgende Messungen werden durchgeführt: Dicke der Folie; Trübung und Transmission; Retardation Ro und Rth

c) Generelle Maschinenbeschreibung und Durchführung des Reckens

Die Laborreckmaschine besteht aus einem Modul für die Probenbeschickung in das die Folie bei Umgebungsbedingungen eingelegt, mit je 4 Kluppen an allen 4 Seiten befestigt und die ganze Vorrichtung anschließend in ein Ofenmodul für das Vorheizen gefahren wird. Nach dem Vorheizen fährt die Probe zurück in den Probenbeschickungsraum und wird gereckt. Nach dem Abkühlen der Vorrichtung können die Kluppen gelöst und die Probe entfernt werden.

Während des Reckvorgangs können die mechanische Ausdehnung sowie die Spannung kontinuierlich gemessen werden, was im Vergleich verschiedener Materialien Rückschlüsse auf eine Auslegung einer Produktionsanlage erlaubt (Daten nicht gezeigt).

d) Reckvorgang

Verschiedene Einstellungen des Reckvorgangs werden untersucht:

- Wechsel der Reckgeschwindigkeit
- Verschiedene Recktemperaturen
- Nacheinander und gleichzeitig Recken bei biaxialem Verfahren

Die erhaltenen geeigneten Einstellparameter sind:

- Vorheizen 1 Minute bei 160 °C
- Recken bei 160 °C
- Kluppentemperatur 130 °C
- Abkühlzeit auf ca. Raumtemperatur 20 sec ("Einfrieren")
- Reckgeschwindigkeit 1% pro sec (bei asymmetrisch biaxial 1% pro sec und 4 % pro sec)
- Reckmodus: monoaxial mit Einschrumpf (= neck-in), monoaxial mit fixierter Dimension senkrecht zur Reckrichtung, biaxial symmetrisch (Faktor MD anders als in TD), biaxial unsymmetrisch (Faktor MD = Faktor TD).
- Reckgrade 1,0 bis 1,3 in Gießrichtung (Längsrichtung, Maschinenrichtung; MD) oder in transversaler Richtung (TD) bei monoxialem Recken.
- Reckgrade 1,0 bis 1.3 in TD und 1,0 bis 1,3 in verschiedenen Kombinationen bei biaxialem Recken.

Wenn nicht anders vermerkt, wird das Muster simultan mit langsamer Geschwindigkeit von 1 % pro sec gereckt:

e) Beurteilung des Ergebnisses

Zunächst wird die Integrität der Probe nach dem Abkühlen und dem Lösen aus den Kluppen visuell beurteilt. Die brauchbare Fläche der Muster ist ca. 60 x 60 mm bei kleinen Proben ("s" wie small, Ausgangsgröße 70 x 70, kann nach dem Recken z.B. auf ca. 85 x 85 mm aufgeweitet werden, je nach Reckbedingungen), 110 x 110 mm brauchbare Fläche je nach Reckbedingungen bei großen Proben ("l" wie large, Ausgangsgröße 120 mm x 120 mm), der Randbereich

geht durch die Einwirkung der Kluppen verloren. Danach wird die Probe zwischen zwei gekreuzte Polarisatoren gelegt und die sich ergebende Polarisations-Farbe beurteilt. Falls die Polarisations- Farbe um den Mittelpunkt der Folie herum gleichmäßig ist, wird der genaue Messfleck mittels Markierung definiert. Andernfalls, wenn die Polarisationsfarbe nicht gleichmäßig ist, wird die Probe verworfen.

f) Messung der gereckten Muster

Folgende Messungen werden durchgeführt:

- Dicke der Folie am Messfleck (s.o.)
- Trübung und Transmission am Messfleck (s.o.)
- Retardation Ro und Rth am Messfleck (s.o.)

Sofern Reckung erfolgt, wird diese wie oben beschrieben vorgenommen. In den nachfolgenden Beispielen wird die Reckung jeweils angegeben als Faktor in Maschinenrichtung (MD) x Faktor in Transversalrichtung (TD), also MD x TD. Faktor 1,0 in TD bedeutet, dass die Folie gegen transversalen gehalten wird, MD x mono, dass keine Haltung in transversaler Richtung stattfindet (was zu Verschmälerung = Einschrumpf führt).

In den nachfolgenden Beispielen erfolgen Prozentangaben in Gew.-%, sofern nicht anders angegeben. "my" steht für μm (Dicke der jeweiligen Folien), r.h. für relative Feuchte (relative humidity).

Beispiel 1: Erfindungsgemäße Folien und deren Herstellung

Angesetzt wird eine 16 Gew.-% Lösung von Triacetylcellulose (TAC) (ACETATI S.A, Verbania, Italien, offizielle Bezeichnung ACEPLAST TLT-HV, Acetylierungsgrad 60,8 %) und Triphenylphospat (TPP) als Weichmacher (90:10 w/w of Feststoff) in Methylenchlorid /Methanol 95/5 (w/w).. Diese wird über Nacht im Rollschrank gelöst. Dieser Lack wird dann portioniert und jeweils die Additive in den Konzentrationen 2,5 % oder 5 % bezogen auf die Feststoffe (TAC + TPP) und weiterhin Lösemittel (um wieder 16%igen Lack zu erhalten) zugegeben und nochmals über Nacht im Rollschrank gelöst. Diese Lacke werden im Wasserbad entlüftet und jeweils Handgüsse hergestellt (vgl. zu den Details Beispiel 7) und über Nacht bei 80 °C getrocknet.

Als erfindungsgemäß zuzusetzende Verbindungen wird jeweils eine der folgenden Verbindungen verwendet:

PGP-2-3:

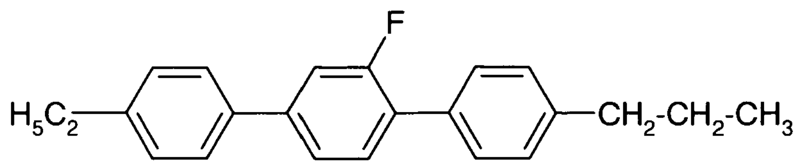

PGP-2-4:

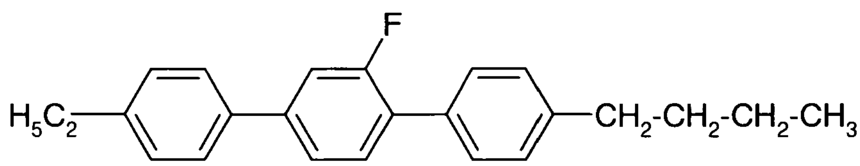

PGP-2-5:

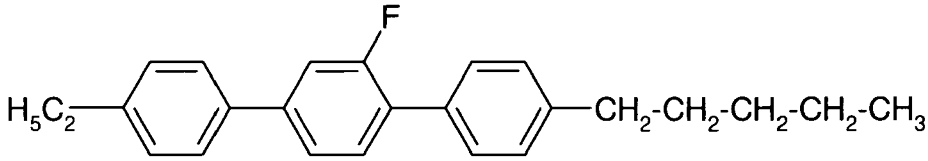

PGP-3-3

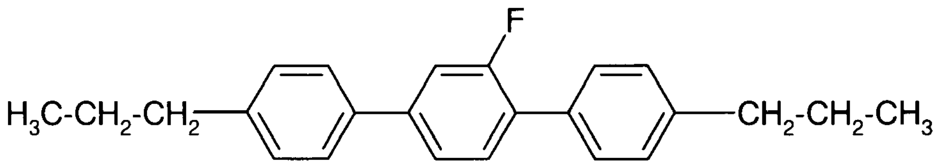

PGIGP-3-5:

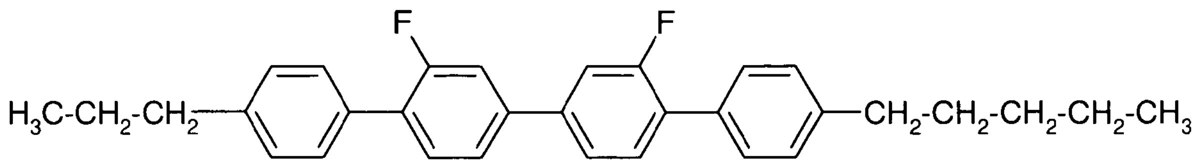

PYP-3-02:

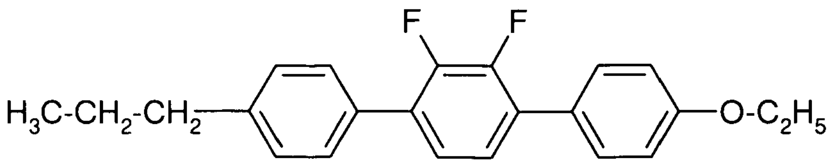

Dicke, Haze und Transmission werden nach dem Trocknen gemessen, wie oben beschrieben.

Beispiel 2: Haltbarkeit (Durability):

Die Haltbarkeit wird für verschiedene Folien im Trockenen (80 °C) aus Beispiel 1 ermittelt wie folgt:

Tabelle 1: Haltbarkeiten für verschiedene flüssigkristalline stabförmige Zusätze

| a) Bedingungen 80°C trocken | | | | |
|---|---|---|---|---|
| PGP-2-3 5 % ungereckt (h) Dicke 79 my | Haze (%) (Trübung) | Transmission (%) | Ro (0x) (nm) | Rth (0x) (nm) |
| 0 | 0,25 | 95,3 | 0 | 189 |
| 100 | 0,43 | 94,6 | 0 | 181 |
| 500 | 0,58 | 95,2 | 0 | 187 |
| | | | | |

(fortgesetzt)

| a) Bedingungen 80°C trocken | | | | |
|---|---|---|---|---|
| PGP-2-3 5 % ungereckt (h) Dicke 79 my | Haze (%) (Trübung) | Transmission (%) | Ro (0x) (nm) | Rth (0x) (nm) |
| % Abweichung nach 500 h | 132 | | 0 | -1 |
| Bedingung 80°, trocken | | | | |
| PGP-2-3 5 % 1,2xmono (h) Dicke 70 my | Haze (%) (Trübung) | Transmission (%) | Ro (1,2x1) (nm) | Rth (1,2x1) (nm) |
| 0 | 0,6 | 95,2 | 211 | 239 |
| 100 | 0,5 | 94,4 | 148 | 226 |
| 500 | 0,54 | 95,3 | 98 | 170 |
| | | | | |
| % Abweichung nach 500 h | -10 | | -53 | -29 |
| b) 60°, 95% r.h. | | | | |
| PGP-2-3 Haze (%) ungereckt5 (Trübung) % (h) Dicke78 my | | Transmission (%) | Ro (0x) (nm) | Rth (1,2x1,2) (nm) |
| 0 | 0,34 | 95 | 1 | 354 |
| 100 | 3,08 | 94,9 | 1 | 253 |
| 500 | 1,65 | 94,6 | 1 | 137 |
| | | | | |
| % Abweichung nach 500 h | 385 | | 0 | -61 |
| | | | | |
| Bedingung 60°, 95% r.h. | | | | |
| PGP-2-3 5 % 1,2x1,2 (s) (h) Dicke 59 my | Haze (%) (Trübung) | Transmission (%) | Ro (1,2x1,2) (nm) | Rth (1,2x1,2) (nm) |
| 0 | 0,12 | 95,3 | 79 | 227 |
| 100 | 0,61 | 95,1 | 70 | 205 |
| 500 | 4 | 95,7 | 51 | 153 |
| | | | | |
| % Abweichung nach 500 h | 350 | | -35 | -32 |
| Bedingung 60°, 95% r.h. | | | | |
| PGP-2-3 5 % 1,2x1,2 (I) (h) Dicke 61 my | Haze (%) Trübung | Transmission (%) | Ro (1,2x1,2) (nm) | Rth (1,2x1,2) (nm) |
| 0 | 0,12 | 95,2 | 31 | 172 |
| 100 | 0,51 | 95,4 | 28 | 177 |

(fortgesetzt)

| Bedingung 60°, 95% r.h. | | | | |
|---|---|---|---|---|
| PGP-2-3 5 % 1,2x1,2 (l) (h) Dicke 61 my | Haze (%) Trübung | Transmission (%) | Ro (1,2x1,2) (nm) | Rth (1,2x1,2) (nm) |
| 500 | 0,74 | 95,2 | 18 | 162 |
| | | | | |
| % Abweichung nach 500 h | 517 | | -43 | -6 |
| Foliendicke vor Reckung: 82 my | | | | |
| c) 80° trocken | | | | |
| PGP-2-4 ungereckt5 % (h) Dicke 76 my | Haze (%) | Transmission (%) | Ro (0x) (nm) | Rth (1,2x1,2) (nm) |
| 0 | 0,25 | 95 | 0 | 181 |
| 100 | 0,32 | 94,1 | 0 | 178 |
| 500 | 0,3 | 95,2 | 0 | 164 |
| | | | | |
| % Abweichung nach 500 h | 20 | | 0 | -10 |
| 80° trocken | | | | |
| PGP-2-4 5 % 1,3xmono (s) (h) Dicke 70 my | Haze (%) | Transmission (%) | Ro (1,3xmono) (nm) | Rth (1,3xmono) (nm) |
| 0 | 0,42 | 95,3 | 300 | 253 |
| 100 | 0,48 | 94,4 | 210 | 219 |
| 500 | 0,39 | 95,4 | 104 | 137 |
| | | | | |
| % Abweichung nach 500 h | -7 | | -65 | -46 |
| Foliendicke vor Reckung 78 my | | | | |

Es zeigt sich, dass bei geeigneten Reckbedingungen ohne weiteres Ro- und Rth-Werte erreicht werden können, die den oben in der Beschreibung genannten bevorzugten Bereichen entsprechen.

Beispiel 3: Retardationswerte Ro und Rth mit und ohne Recken bei verschiedenen Reckfaktoren für Folien:

Bei 2,5 % PGP-2-5 (Tabelle 2a)), 5 % PGP-3-3 (Tabelle 2b)) oder 5 % PGP-2-4 beinhaltenden TAC-Folien (Tabelle 2c)) werden nach verschiedenen, wie oben und aus der Tabelle ersichtlich vorgenommenen Reckungen die Ro- und Rth-Werte ermittelt.

Tabelle 2 Retardationswerte bei verschiedenen Reckfaktoren und Zusammensetzungen

a) mono- und symmetrisch biaxiales Recken, 2,5 % PGP-2-5 als Zusatz, Foliendicken vor Reckung 78 bis 80 my, mehrere Versuche und Mittelwerte werden angezeigt

| PGP-2-5 (2,5 %) Reckungsfaktor Y | Ro (nm) PGP-2-5 Yxmono | Rth (nm) PGP-2-5 Yxmono | Ro (nm) PGP-2-5 YxY bi | Rth (nm) PGP-2-5 YxY bi | Ro (nm) PGP-2-5 YxY bi | Rth (nm) PGP-2-5 YxY bi |
|---|---|---|---|---|---|---|
| Ungereckt=1 | *1* | *144* | *1* | *147* | *1* | *147* |
| 1,05 | *70* | *128* | *13* | *106* | *15* | *107* |
| 1,1 | *125* | *135* | *26* | *116* | *24* | *121* |
| 1,2 | *198* | *144* | *26* | *112* | | |
| 1,3 | | | | | | |

b) mono-, symmetrisch-biaxiales und asymmetrisch-biaxiales Recken, PGP-3-3 als Zusatz

| PGP-3-3<br>(5 %)<br>Reckungsfaktor Y | Ro (nm) PGP-3-3 Yxmono | Rth (nm) PGP-3-3 Yxmono | Ro (nm) PGP-3-3 YxY bi | Rth (nm) PGP-3-3 YxY bi | Ro (nm) PGP-3-3 asym MD: TD 1.05:1.0 | Rth (nm) PGP-3-3 asym MD:TD 1.05:1.0 |
|---|---|---|---|---|---|---|
| (ungereckt) 1 | *0* | *22C* | *0* | *216* | 1 | 221 |
| 1,05 | | | *64* | *25C* | 60 | 236 |
| 1,1 | | | *103* | *265* | | |
| 1,2 | *10* | *335* | *98* | *275* | | |
| Foliendicke vor dem Recken 78 bis 80 my. | | | | | | |

Hier zeigt sich (letzte Spalte in b)), dass bereits bei einfacher Schichtdicke Bedingungen gefunden werden, bei denen besonders bevorzugte Retardationswerte für Ro im Bereich von 40 bis 60 nm und für Rth im Bereich von 210 bis 240 nm gefunden werden können.

c) Asymmetrisches Recken, 2,5 % PGP 2-5

| PGP-2-5 (2,5 %) Reckfaktor | Ro (nm) PGP-2-5 asym (MDxTD) 1,2x1 | Ro (nm) PGP-2-5 asym (MDxTD) 1,2x1 | Ro (nm) PGP-2-5 asym (MDxTD) 1,2x1 | Rth (nm) PGP-2-5 asym (MDxTD) 1,3x1,05 oder 1,2x1 | Ro(nm)PGP-2-5 asym (MDxTD) 1x1,2 (gehalten) | Rth (nm) PGP-2-5 asym (MDxTD) 1x1,2 (gehalten) | Ro (nm) PGP-2-5 asym (MDxTD) 1,05x1,2) | Rth (nm) PGP-2-5 asym (MDxTD) 1,05x1,2 |
|---|---|---|---|---|---|---|---|---|
| 1 | *1* | *143* | *1* | *143* | *1* | *143* | *1* | *143* |
| 1,05 | *90* | *131* | | | *107* | *120* | | |
| 1,1 | | | 62 | 121 | | | 95 | 140 |
| 1,2 | | | 102 | 125 | | | | |

Die entsprechenden Daten der fett gedruckten Spalten (zweite Tabelle) sind (mit teilweise abweichender Nomenklatur) in Fig. 1 graphisch dargestellt.

Es zeigt sich, dass ohne weiteres Reckfaktorverhältnisse gefunden werden können, bei denen die Folien in den (nur schematisch ellipsoid, eigentlich rechteckig zu denkenden) als "bevorzugter Zielbereich" gekennzeichneten Bereichen in Fig. 1 liegende Ro- und Rth-Werte aufweisen.

Zum Vergleich zeigt die nachfolgende Tabelle die Ro- und Rth-Werte bei TAC-Folien ohne erfindungsgemäßen Zusatz von Verbindungen der Formel I:

Tabelle 3: Retardation ohne Verbindungen der Formel I:

| TAC | monoaxial Ro | monoaxial R th |
|---|---|---|
| **Reckfaktor** 1(= ungereckt) | 1 | 47 |
| **Reckfaktor** 1,2 | 17 | 47 |
| | | |

Die Bezeichnung "mono" bedeutet hier, dass nicht seitlich gehalten wurde im Falle der mono-axialen Reckung, d.h. neck -in findet statt(Reckfaktor 1,2).

Hier zeigt sich keine Änderung des Rth, jedoch eine leichte des Ro, erklärbar dadurch, dass keine Änderung des Brechungsindex in der Z - Achse auftritt, jedoch in x und y Richtung in der Folienebeneo.k.

Beispiel 4: Ermittlung der Haltbarkeit bei 60 °C, 95 % relativer Luftfeuchte für ungereckte und gereckte Folien:

Die Haltbarkeit (Konstanz der Retardationswerte) bei 60 °C und 95 % relativer Luftfeuchtigkeit wird für die in der nachfolgenden Tabelle genannten, nach in Beispiel 1 genannten Verfahren hergestellten Folien ermittelt:

Tabelle 4: Haltbarkeit für angegebene Folien

| a) nicht gereckt 60°, 95 % | | | | |
|---|---|---|---|---|
| PGP 2-3 (5 %) ungereckt (h)<br>77 my | Haze | Transmission (%) | Ro (nm) PGP 2-3 (ungereckt) | Rth (nm) PGP 2-3 (ungereckt) |
| 0 | 0,34 | 95 | 1 | 354 |
| 100 | 3,08 | 94,9 | 1 | 253 |
| 500 | 1,65 | 94,6 | 1 | 137 |
| % Abweichung nach 500 h | 385 | | 0 | -61 |
| PGP-2-4 ungereckt (h)<br>61 my | Haze | Transmission | Ro (nm) PGP-2-4 (ungereckt) | Rth (nm) PGP-2-4 (ungereckt) |
| 0 | 0,26 | 95 | 2 | 162 |
| 100 | 3,84 | 94,4 | 2 | 167 |
| 500 | 1,69 | 94 | 11,2 | 138 |
| % Abweichung nach 500 h | 550 | | -50 | -14 |
| PGP-2-5<br>2,5 %<br>(82 μm) ungereckt (h) | Haze | Transmission | Ro (nm) PGP-2-5 | Rth (nm) PGP-2-5 |
| 0 | 0,28 | 95,2 | 0 | 137 |
| 120 | 0,41 | 95,1 | 1 | 116 |
| 500 | 1,28 | 95 | 0 | 107 |

(fortgesetzt)

| PGP-2-5<br>2,5 %<br>(82 µm) ungereckt (h) | Haze | Transmission | Ro (nm) PGP-2-5 | Rth (nm) PGP-2-5 |
|---|---|---|---|---|
| | 357 | | nicht berechenbar | -22 |
| PGP-3-3<br>5%<br>81 µm ungereckt (h) | Haze | Transmission | Ro (nm) PGP-3-3 | Rth (nm) PGP-3-3 |
| 0 | 0,34 | 95,4 | 1 | 212 |
| 120 | 0,67 | 95,3 | 1 | 199 |
| 500 | 0,87 | 95,3 | 1 | 141 |
| % Abweichung nach 500 h | 156 | | 0 | -33 |
| PYP-3-02 (h)<br>5 %<br>Dicke 80my | Haze | Transmission | Ro (nm) PYP-3-02 | Rth (nm) PYP-3-02 |
| 0 | 0,64 | 95,2 | 0 | 205 |
| 120 | 1,36 | 95,1 | 1 | 185 |
| 500 | 1,73 | 95,3 | 1 | 141 |
| % Abweichung nach 500 h | 170 | | nicht berechenbar | -31 |
| b) gereckt: | | | | |
| PGP-2-3 (1 b) (gereckt) (h)<br>5 %<br>Dicke 59 my,<br>Foliengröße s | Haze | Transmission | Ro (nm) PGP-2-3 (1,2x1,2) | Rth (nm) PGP-2-3 (1,2x1,2) |
| 0 | 0,12 | 95,3 | 79, | 227 |
| 100 | 0,61 | 95,1 | 70 | 205 |
| 500 | 0,54 | 95,7 | 51 | 153 |
| % Abweichung nach 500 h<br>Streichen hier nur Mittelwerte | 350 | | -35 | -32 |
| | | | | |
| | | | | |
| | | | | |
| | | | | |
| % Abweichung nach 500 h | 203 | | -22 | -14 |
| PGP-2-3 (gereckt) (h) 5 %<br>Dicke 61 my<br>Foliengröße s | Haze | Transmission | Ro PGP-2-3 (1,2x1,2) | Rth PGP-2-3 (1,2x1,2) |
| 0 | 0,12 | 95,2 | 32 | 172 |
| 100 | 0,51 | 95,4 | 28 | 177 |

(fortgesetzt)

| PGP-2-3 (gereckt) (h) 5 % Dicke 61 my Foliengröße s | Haze | Transmission | Ro PGP-2-3 (1,2x1,2) | Rth PGP-2-3 (1,2x1,2) |
|---|---|---|---|---|
| 500 | 0,74 | 95,2 | 18 | 162 |
| % Abweichung nach 500 h | 517 | | -43 | -6 |
| PGP-2-4 (gereckt) (h) 5 % Dicke 63my Foliengröße s | Haze | Transmission | RoPGP-2-4 (1,2xbi) | Rth PGP-2-4 (1,2xbi) |
| 0 | 0,15 | 95,2 | 48 | 204 |
| 100 | 0,49 | 95,1 | 39 | 196 |
| 500 | 0,43 | 95,7 | 35 | 173 |
| % Abweichung nach 500 h | 187 | | -27 | -15 |
| PGP-2-4 (gereckt) (h) 5 % Dicke 63 my Foliengröße s | Haze | Transmission | Ro (nm) PGP-2-4 (1,2x1,2) | Rth (nm) PGP-2-4 (1,2x1,2 ) |
| 0 | 0,15 | 95,2 | 49, | 199 |
| 100 | 0,61 | 95,4 | 4 | 197 |
| 500 | 0,48 | 95,5 | 41 | 174 |
| % Abweichung nach 500 h | | | | |
| PGP-2-5 (gereckt) (h) 2,5% 71 μm gereckt Foliengröße s | Haze | Transmission | Ro (nm) PGP-2-5 Faktor Reckung 1,12X 1,1 | Rth (nm) PGP-2-5 |
| 0 | 0,39 | 94,9 | 23 | 108 |
| 120 | 0,51 | 95,1 | 23 | 115 |
| 500 | 0,39 | 95,1 | 24 | 112 |
| % Abweichung nach 500 h | 0 | | 4 | 4 |
| PGP-3-3 (gereckt) (h) 5 % 78 μm gereckte Dicke Foliengröße s | Haze | Transmission | Ro (nm) PGP-3-3 Faktor Reckung 1,05X 1,05 | Rth (nm) PGP-3-3 |
| 0 | 1 | 94,9 | 73 | 246 |
| 120 | 0,78 | 95 | 68 | 287 |
| 500 | 0,67 | 95,1 | 61 | 286 |
| % Abweichung nach 500 h | -33 | | -16 | 16 |

(fortgesetzt)

| PYP-3-02(gereckt) (h) 5% Dicke 78 my | Haze | Transmission | Ro (nm) PYP-3-02 Faktor Reckung 1,05x1,05 | Rth (nm) PYP-3-02 |
|---|---|---|---|---|
| 0 | 0,54 | 95,1 | 48 | 198 |
| 120 | 0,91 | 94,8 | 42 | 144 |
| 500 | 1,3 | 94,8 | 41 | 132 |
| % Abweichung nach 500 h | 141 | | -15 | -33 |

Es zeigt sich eine weitgehende Stabilität der Retardationswerte auch nach 500 Stunden unter den angegebenen recht harschen Bedingungen.

Beispiel 5: Zusammenfassung bei verschiedenen Reckvorgängen erhaltener Retardationswerte:

Tabelle 5: Zusammenfassung bei verschiedenen Reckvorgängen erhaltener Retardationswerte

| PGP-2-3 Streckung | PGP-2-3 mono | Rth (nm) PGP-2-3 mono | Ro (nm) PGP-2-3 mono | Rth (nm) PGP-2-3 mono |
|---|---|---|---|---|
| 1 | 1 | 174 | 1 | 197 |
| 1,2 | 220 | 220 | 225 | 198 |
| 1,3 | 284 | 216 | | |
| | | | | |
| PGP-2-3 | Ro (nm) PGP-2-3 bi Faktor jeweils Angabe in linker Spalte | Rth (nm) PGP-2-3 bi Faktor jeweils Angabe in linker Spalte | Ro (nm) PGP-2-3 bi Faktor jeweils Angabe in linker Spalte | Rth PGP-2-3 bi Faktor jeweils Angabe in linker Spalte |
| 1 | 1 | 174 | 1 | 215 |
| 1,2 | 80 | 227 | 34 | 146 |
| 1,3 | | | | |
| | | | | |
| PGP-2-4 | Ro (nm) PGP-2-4 mono | Rth (nm) PGP-2-4 mono | Ro (nm) PGP-2-4 mono | Rth PGP-2-4 mono |
| 1 | 1 | 220 | 1 | 214 |
| 1,2 | 233 | 220 | 236 | 177 |
| 1,3 | 294 | 202 | | |
| | | | | |

(fortgesetzt)

| PGP-2-4 | Ro (nm) PGP-2-4 Faktor jeweils Angabe in linker Spalte | Rth (nm) bi PGP-2-4 Faktor jeweils Angabe in linker Spalte | Ro (nm) PGP-2-4 bi Faktor jeweils Angabe in linker Spalte | Rth (nm) PGP-2-4 bi Faktor jeweils Angabe in linker Spalte | Ro (nm) PGP-2-4 bi Faktor jeweils Angabe in linker Spalte | Rth (nm) PGP-2-4 bi Faktor jeweils Angabe in linker Spalte |
|---|---|---|---|---|---|---|
| 1 | 1 | 220 | 1 | 220 | 1 | 196 |
| 1,2 | 49 | 202 | 16 | 128 | 108 | 203 |
| 1,3 | | | | | | |

Als Verbindung der Formel I wird PGP-2-4 eingesetzt, 5 % Gehalt, Dicke 78 bis 80 my. Mittelwerte aus mehreren Tests.

Beispiel 6: Haltbarkeiten zusammengefasst für unterschiedliche Additive:

Die Haltbarkeit (Durability) von Folien mit verschiedenen Additiven der Formel I wird unter den in der nachfolgenden Tabelle angegebenen Bedingungen überprüft.

Tabelle 6 Zusammenfassung Haltbarkeiten

a) bei 500 h bei 80 °C, trocken:

| Additiv | % w/w | Reckung | Dicke (µm) (unge-reckt) | Änderung des Haze (relativ in % 0 bis 500h) | Änderung von Ro (relativ in % 0 bis500 h) | Änderung von Rth (relativ in % 0 bis 500 h) |
|---|---|---|---|---|---|---|
| | | | | | | |
| PGP-2-3 | 5 | nicht gereckt | | 385 | ns§ | -61 |
| PGP-2-4 | 5 | | | ns§ | ns | -10 |
| PGP-2-5 | 2,5 | | 87 | ns | ns | 0 |
| PGP-3-3 | 5 | | 77 | ns | ns | -18 |
| PYP-3-02 | 5 | | 82 | ns | ns | -5 |
| | | | | | | |
| PGP-2-3 | 5 | 1.2x1,2 | | 350 | -39 | -19 |
| PGP-2-4 | 5 | 1.2x1,2 | | 220 | -22 | -14 |
| PGP-2-5 | 2,5 | 1.2x1,2 | 73 | ns | ns | ns |
| PGP-3-3 | 5 | 1,2x1,2 | 78 | ns | -100 | -31 |
| PYP-3-02 | 5 | 1.2x1,2 | 64 | 140 | -15 | -33 |
| | | | | | | |

ns bedeutet: nicht signifikant

b) 500 h 60° 95 % r.h.

| Additiv | % w/w | Reckung | Dicke (µm) **vor/ nach Reck?** | Change of Haze (rel % 0 to 500h) | Änderung von Ro (relativ in % 0 bis500 h) | Änderung von Rth (relativ in % 0 bis 500 h) |
|---|---|---|---|---|---|---|
| | | | | | | |
| PGP-2-3 | 5 | nicht gerec kt | 60 | 385 | ns | -61 |
| PGP-2-4 | 5 | | 63 | 550 | ns | -14 |

| | | | | | | |
|---|---|---|---|---|---|---|
| PGP-2-5 | 2,5 | | 82 | 360 | ns | -22 |
| PGP-3-3 | 5 | | 80 | 160 | ns | -33 |
| PYP-3-02 | 5 | | 81 | 170 | ns | -31 |
| | | | | | | |
| PGP-2-3 | 5 | 1.2 bi | 60 | 350 | -35 | -32 |
| PGP-2-4 | 5 | 1.3 u | 63 | ns | -65 | +190 |
| PGP-2-5 | 2,5 | 1,2 bi | 71 | ns | ns | -20 |
| PGP-3-3 | 5 | 1.2 bi | 72 | ns | -16 | 16 |
| PYP-3-02 | 5 | 1,2 bi | 78 | ns | -56 | -33 |
| | | | | | | |
| | | | | | | |

Beispiel 7: Folien mit Additiv der Formel I und UV-Absorbern:

Es werden Lacke mit einem UV-Absorber als weiterem Additiv neben dem nachfolgend jeweils angegebenen Additiv der Formel I hergestellt.

Die Herstellung erfolgt unter Verwendung eines Lacks aus 16 Gew.-% Cellulosetriacetat (Fa. Acetati, Aceplast TLT-HV) (Gehalt an gebundenem Acetyl 60,8 %) in Methylenchlorid/Methanol (90/10 v/v) Triphenylphosphat alsWeichmacher (10/90 w:w bezogen auf Feststoffe). Dann wird über Nacht im Rollschrank aufbewahrt. Die Lösung wird dann portioniert und jeweils die Additive Uvinul 3049 ® (BASF) (0,64% bezogen auf Feststoff) und 2,5 % PGP 2-5 (bezogen auf Feststoff) hinzugefügt. Diese Lacke werden im Wasserbad entlüftet und jeweils mittels einer Rakel (Gießspalt 650 μm, Gießbreite 220 mm, Rollgeschwindigkeit 25 mm/sec), Coatmaster® 509 MC der Firma Erichsen GmbH & Co. KG, Hemer, Deutschland, Handgüsse auf einer 10 mm Glasplatte ausgebreitet und über Nacht bei 80 °C getrocknet und so ca. 80 μm dicke Folien hergestellt. Diese Folien wrrden monoaxial unter den gleichen Bedingungen wie oben erwähnt gereckt. Der Reckgrad beträgt jeweils 1,2 x 1,0.

Es ergeben sich folgende Haltbarkeiten bei 60 °C/95 °C oder 80 °C trocken

Tabelle 7:

| Testdauer (Tage) | Rth (nm) (79 my Dicke nach Recken) | Rth (nm) (79 my Dicke nach Recken) | |
|---|---|---|---|
| | (2,5 % PGP-2-5+UV) 60°C/95% | (2,5 %PGP-2-5+UV) 80°C/0% | |
| 0 | 142 | 127 | |
| 7 | 147 | 131 | |
| 14 | 149 | 127 | |
| 21 | 150 | 122 | |
| 28 | 144 | 119 | |
| 35 | 137 | 121 | |
| 42 | 171 | 123 | |
| | | | |
| | | | |
| Testdauer (Tage) | Ro (nm) | Ro(nm) | |
| | 18 (PGP-2-5+UV) 60°C/95% | 20 (PGP-2-5+UV) 90°C/0% | |
| 0 | 94 | 63 | |
| 7 | 86 | 46 | |
| 14 | 89 | 49 | |

(fortgesetzt)

| Testdauer (Tage) | Ro (nm) | Ro(nm) | |
|---|---|---|---|
| | 18 (PGP-2-5+UV) 60°C/95% | 20 (PGP-2-5+UV) 90°C/0% | |
| 21 | 97 | 57 | |
| 28 | 98 | 51 | |
| 35 | 97 | 55 | |
| 42 | 99 | 51 | |
| | | | |

Die Ergebnisse zeigen, dass die Zugabe eine UV-Absorbers keinen negativen Effekt auf die Haltbarkeit hat.

Beispiel 8: TAC-Kompensationsfolie mit PGP 2-5, an der Oberfläche verseift:

Die Verseifung der Oberfläche einer TAC-Folie mit PGP-2-5 (2,5 %) wird durchgeführt. Es ergeben sich keine signifikanten Änderungen der optischen Eigenschaften.

Mischung: 16%iger Lack, T220 mit 10%TPP, 2,5% PGP-2-5 und 0,64.% Uvinul 3049 ®. Muster: 7,5x5cm, gereckt 1,3x1,3, 74μm.

Die Verseifung wird mit 1,5-molarer KOH durchgeführt. Die Folie wird 3min bei 50°C in die wässrige KOH gehängt (Benetzungsfläche ca. 5x5cm) und danach 1 min mit dest. Wasser abgespült. Anschließend wird die Probe mit Druckluft trockengeblasen und vermessen.

Die nachfolgende Tabelle zeigt die Messergebnisse:

Tab. 8:

| | | Original | Nach Verseifung |
|---|---|---|---|
| Retardation $R_0$ / Rth | nm | 117/ 7,2 | 108/ 6,4 |
| Haze | % | 94,1 | 94,5 |
| Transmission (Gardner) | % | 0,53 | 0,45 |
| | | | |
| | | | |
| | | | |
| UV-Spektrum (200-600nm) | | x | x |
| Transmission bei 400nm | % | 52,72 | 52,48 |
| Vergleich der Spektren vor und nach Verseifung: identisch. | | | |

Beispiel 9: Mischung von CAP mit PGP-2-5

Vorgehensweise für diese Beispiel: Anstelle von Triacetylellulose wird für die Herstellung einer erfindungsgemäßen Kompensationfolie CAP = Celluloseacetopropionat der Firma Eastman Typ CAP 141-20 (Eastman Chemical Co., Kingsport, TN, USA; $M_w$ = ca. 280'000 g per mol, $M_n$ = ca. 80'000 g per mol.) verwendet. Die Relation von Acetat zu Propionat beträgt hier 75 zu 25. Die Herstellung erfolgt analog Beispiel 1, mit folgenden Einzelheiten:

Als Additiv der Formel I wird PGP-2-5 verwendet. Es werden jeweils einfach konzentrierte Lösungen in Standard-Celluloseacetopropionat-Lack mit 6 % TPP als Weichmacher und 2,5 % PGP 2-5, bezogen auf die Masse (Gewicht) der Feststoffe, verwendet.

Die Bedingungen für die Herstellung entsprechen den in Beispiel 1 genannten. Die Dicke der hergestellten Folien liegt bei 80 μm. Die Messungen erfolgen wie bei den anderen Folien. Es ergeben sich folgende Messwerte:

Tab. 9:

| | Haze | Ro | Rth | Dicke | Brechungsindex |
|---|---|---|---|---|---|
| CAP+2,5% PGP-2-5 | 0,23 | 1,7 | 215 | 86 | 1.477 |

Es zeigt sich, dass hier relativ hohe Rth-Werte erzielt werden können. Der Vorteil ist, dass weniger Additiv nötig ist als bei einer TAC-Folie, oder eine relativ geringe Schichtdicke.
Daher ist besondere Eignung für Kompensation in LCD-Displays mittels nur einer Kompensationsfolie gegeben (Ein-Schicht-Lösung).

Beispiel 10: Herstellung eines LCD-Displays gemäß der Erfindung

a) Herstellung einer Polarisatorplatte:

Ein gereckter PVA-Film wird mit Iod behandelt zur Herstellung einer Polarisatormembran.
Ein TAC-Film nach Beispiel 1 mit PGP-2-5 als Additiv, gereckt bis zum Erhalten eines Ro von 40 bis 60 nm und einem Rth von 120 bis 140 nm, wird an der Oberfläche einer Verseifung unterzogen durch Behandlung in 1,5 M NaOH bei 50 °C und dann auf die eine Seite der Polarisatormembran mittels eines Polyvinylalkoholklebers auflaminiert.
Eine kommerziell erhältliche TAC-Folie ohne Additiv der Formel I (Fujitak TD80F ®) wird ebenfalls analog an der Oberfläche einer Verseifung unterzogen und auf der gegenüberliegenden Seite der Polarisatormembran auflaminiert.
Die Polarisatormembran und der TAC-Film aus Beispiel 1 werden so angeordnet, dass die schnelle Achse der Membran und die langsame Achse des Films im wesentlichen parallel ausgerichtet sind. Die Polarisatormembran und der TAC-Film ohne Additiv der Formel I werden so ausgerichtet, dass die schnelle Achse der Membran und die langsame Achse des Films im wesentlichen senkrecht zueinander liegen. So wird eine Polarisatorplatte erhalten.

b) Herstellung einer Flüssigkristallanzeige:

Ein Paar Polarisatorplatten und ein Paar optischer Kompensationsfolien werden aus einer kommerziell erhältlichen Flüssigkristallanzeige (VL-1530S, Fujitsu, Ltd.) entfernt, die eine Flüssigkristallzelle mit vertikal ausgerichteten (VA) Flüssigkristallmolekülen aufweist.
Anstelle der entfernten Teile wird je eine nach a) erhaltene Polarisatorplatte auf jede Seite (hintere Beleuchtungsseite (backlight side) und Betrachtungsseite (viewing side)) mit einem Kleber auflaminiert, so dass der TAC-Film mit dem Additiv (Kompensationsfolie) innen (in Richtung der Flüssigkristallzelle) zu liegen kommt. Die Polarisatorplatte auf der Betrachungsseite ist so angeordnet, dass die schnelle Achse longitudinal ausgerichtet ist, während die Platte auf der Rückseite so angeordnet ist, dass die schnelle Achse lateral ausgerichtet ist ("Cross-Nicol"-Positionen).
Der Betrachtungswinkel der hergestellten Flüssigkristallanzeige wird mittels eines Messgerätes (EZ-Contrast 160D, ELDIM) ermittelt.
Beispiel 11: Beispiel 1: Herstellung einer Gießfolie aus Cellulosetriacetat mit einer Dicke von 80 µm unter Zudosierung eines Additiv-Konzentrates.
Aus 2381 kg Cellulosetriacetat (Eastman/ CA-435-40S, DS » 2.96), 13483 kg Dichlormethan:Methanol-Gemisch (9:1 Vol.), 324 Triphenylphosphat und 35,7 kg UV-Absorber (Uvinul 3049®, BASF) wird unter Rühren, Kühl- und Heizzyklen eine homogene Lösung hergestellt und diese zum Entgasen auf ca. 40°C erwärmt. Über Zwischentanks wird die Lösung durch mehrere Filter aus Metallfaservlies (Porengröße 15-17 µm bzw. 5-7 µm) bei erhöhtem Druck und Temperatur filtriert, und dann in-line (in der Pumpleitung mittels eines statischen Mischers) mit einer ebenfalls filtrierten Zudosierlösung vermischt, die neben den oben genannten Stoffen noch weiteres Dichlormethan:Methanol-Gemisch (9:1 Vol.), ein Antiblock-Additiv und ein Antistatik-Additiv enthält. Das Mischverhältnis wird so eingestellt, dass in der trockenen Folie 0.2-0.5 (0.38) Gew.-% Antiblock-Additiv enthalten sind.
Zusätzlich werden bei Raumtemperatur durch 2 Stunden Rühren 207 kg einer Lösung des Additivs PGP-2-5 hergestellt, in der sich 5,6 Gew-% Additiv, 1,26 % Celluloseacetat, 0,14 % Triphenylphosphat und 93 % Dichlormethan: Methanolgemisch (9:1 Vol) befinden. Diese Lösung wird der o.g. Celluloseacetatlösung nach Filtration kontinuierlich zugeführt und in-line gemischt.
Nach Temperierung auf 31 °C wird die Lösung unter einer Dichlormethan-Methanol-Atmosphäre mit einem Dichlormethandampf -Gehalt von ca. 3-15 Vol.% (Haube/BK) und einer Temperatur von 29 °C in der erforderlichen Dicke (Gießspalt ca. 600 µm) auf ein mit 2 m/min umlaufendes poliertes endloses Stahlband von 28 m Länge und ca. 1,45 m Breite gegossen. Die Temperatur im Bandkanal wird zur Abnahmestelle hin stufenweise auf ca. 90° erhöht, dort die Folie abgezogen und die gebildete Folie in den Trockenschrankbereich geführt. Anschließend wird die Folie über eine Länge von ca. 90 m stufenweise von ca. 40°C im Anfangsbereich auf ca. 90 °C bei ansteigender Temperatur

getrocknet und schließlich nach dem Abkühlen auf 1336 mm Breite beschnitten und aufgewickelt. Nach Einstellung eines stationären Betriebszustandes wird eine 80 μm dicke Folie mit einem Lösungsmittelrestgehalt von ca. 0,7 Gew. % und einer optischen Verzögerung (in plane) Ro von ca. 1 nm und (out of plane) Rth von ca. 130 nm erhalten. Diese Folienrolle wird in einem anschließenden Reckprozess weiterverarbeitet, wie bei der Beschreibung der Mess- und Arbeitsmethoden beschrieben.

Beispiel 12: Herstellung von PGP-2-5:

Die Verbindung PGP-2-5 wird wie folgt hergestellt:

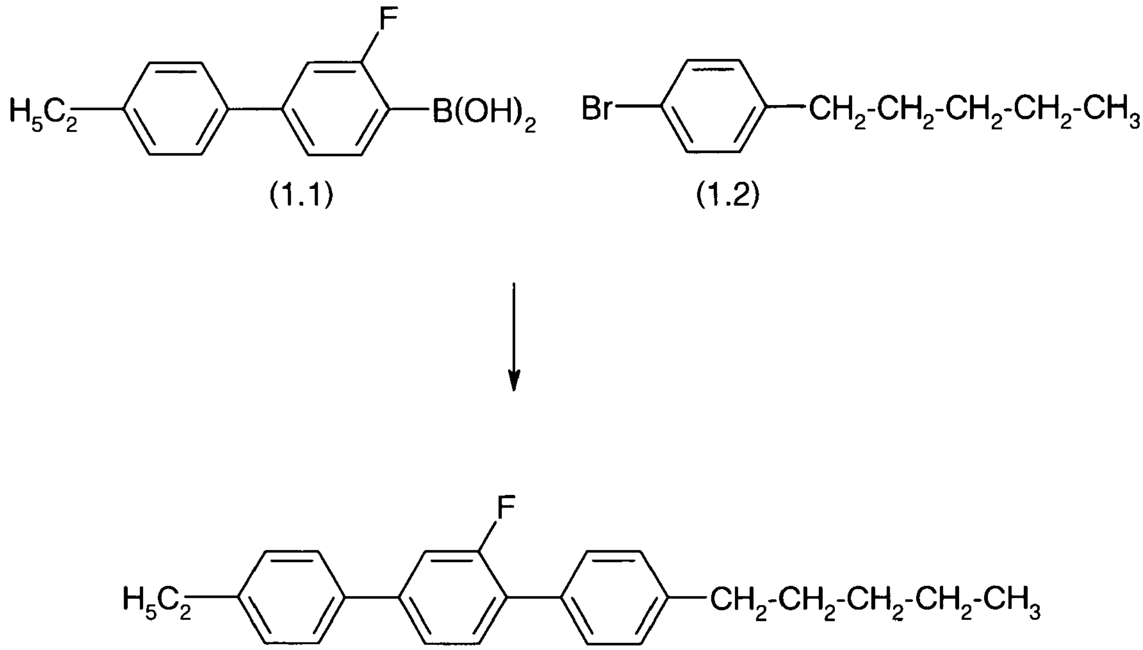

(1.1) (1.2)

PGP 2-5

6,7 kg (29,4 mol) 1-Brom-4-n-pentylbenzol (1.2), 15 kg di-Natriumtetraboratdekahydrat, 100,5 g Bis(triphenylphosphin)palladium(II)chloride und 21,75 g Hydraziniumhydroxid werden in 10 L Wasser und 10 kg THF vorgelegt und unter Rühren auf 60 °C erhitzt. Dann wird innerhalb 30 min eine Lösung von 7,5 kg (26,7 mol) der Boronsäure (1.1) in 18 kg THF zudosiert und 1,5 h nachgerührt. Die wässrige Phase wird abgetrennt, die Lösung zum Rückstand eingeengt und dieser getrocknet. Der Rückstand wird in 25L Acetonitril und 10L Ethanol bei 50 °C gelöst und durch Abkühlen auf 0 °C über Nacht auskristallisiert. Die Kristalle werden mit kaltem Ethanol gewaschen und getrocknet. Nach Säulenchromatographie in n-Heptan, Filtration und nochmaligem Waschen erhält man 7,8 kg (22,4 mol, 84 %) der Verbindung PGP-2-5, GC: 97 %. Flüssigkristallines

## Patentansprüche

1. Optische Kompensationsfolie auf Zelluloseacylat-Basis für Flüssigkristallanzeigen, welche als Zusatz mindestens eine aromatische Verbindung mit mindestens zwei aromatischen Ringen aufweist, **dadurch gekennzeichnet, dass** es sich bei der aromatischen Verbindung um eine solche der Formel I handelt,

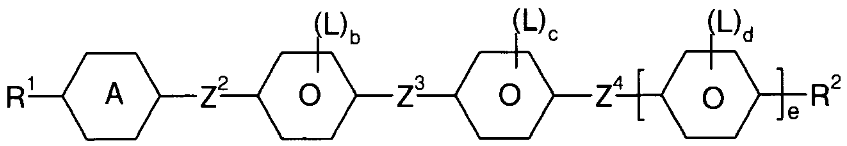 I

worin

$R^1$ geradkettiges Alkyl oder Alkoxy mit 1 bis 12 C-Atomen, worin auch eine oder mehrere $CH_2$-Gruppen durch -O-, -S-, -CO-, -CO-O-, -O-CO-, -CO-$NR^4$-, -$NR^4$-CO- so ersetzt sein können, dass O- und/oder S-Atome nicht direkt miteinander verknüpft sind, und worin auch ein oder mehrere H-Atome durch F ersetzt sein können, bedeutet,

$R^2$CN, F, Cl oder geradkettiges Alkyl oder Alkoxy mit 1 bis 12 C-Atomen, worin auch eine oder mehrere $CH_2$-Gruppen durch -O-, -S-, -CO-, -CO-O-, -O-CO-, -CO-$NR^4$-, -$NR^4$-CO- so ersetzt sein können, dass O- und/oder S-Atome nicht direkt miteinander verknüpft sind, und worin auch ein oder mehrere H-Atome durch F ersetzt sein können, bedeutet,

der Ring 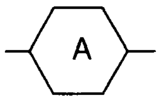 entweder 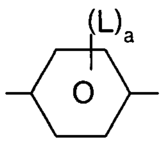 oder 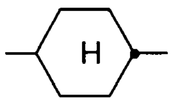

bedeutet;

$Z^2$-$Z^4$ jeweils unabhängig voneinander -CO-O-, -O-CO-, -CON$R^4$-, -N$R^4$CO-, -$CH_2$O-, - O$CH_2$-, -$CH_2$S-, -S$CH_2$- oder eine Einfachbindung, wobei $R^4$ für Wasserstoff oder $C_1$-$C_7$-Alkyl steht, bedeuten,

die Reste L unabhängig voneinander H, F oder einer der Reste L auch Cl bedeuten;

und a, b, c und d jeweils unabhängig voneinander eine ganze Zahl 0, 1 oder 2; und

e eine ganze Zahl 0 oder 1 bedeuten.

**2.** Optische Kompensationsfolie nach Anspruch 1, welche als Verbindung der Formel I mindestens eine solche der Formeln,

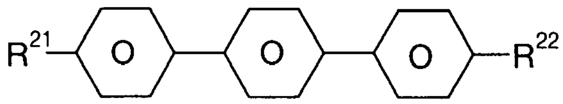

,

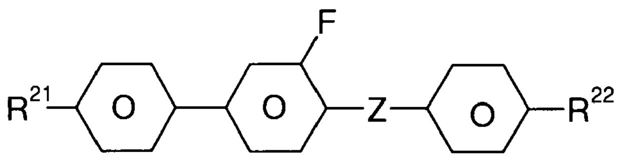

,

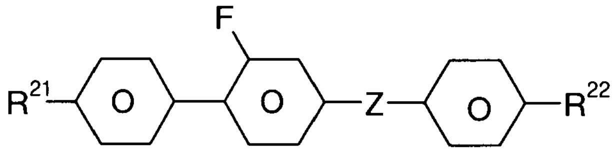

,

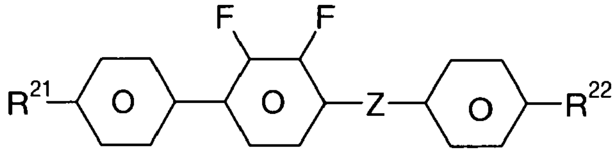

,

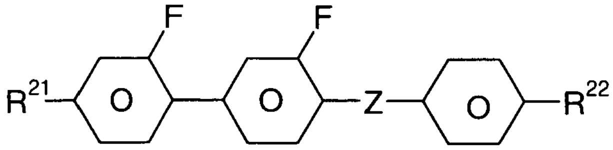

,

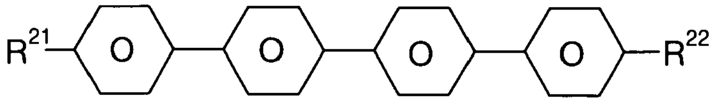

,

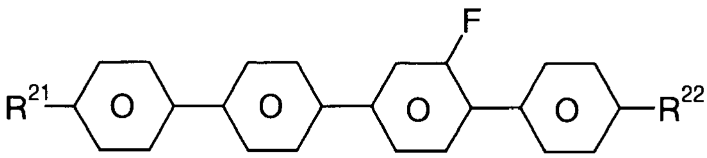

,

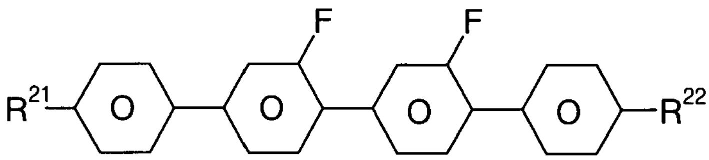

,

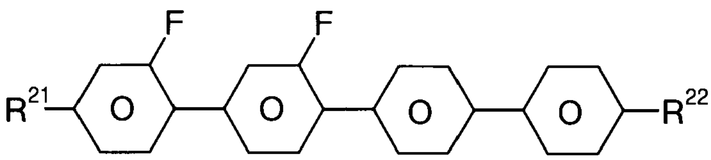

,

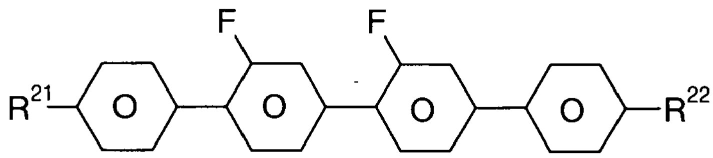

,

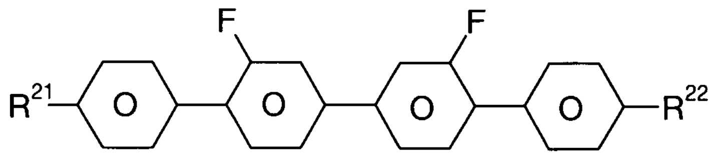

,

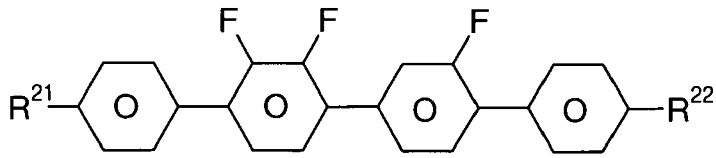

,

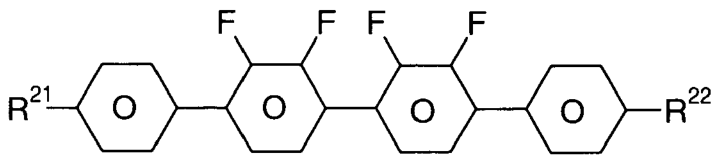

,

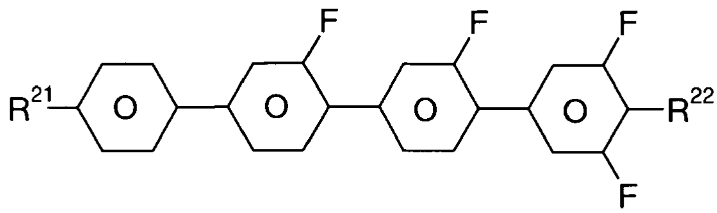

,

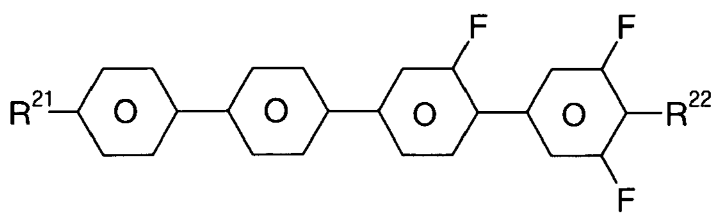

,

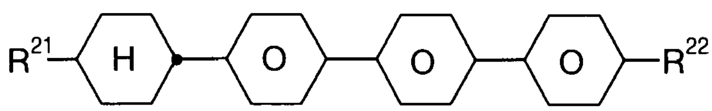

,

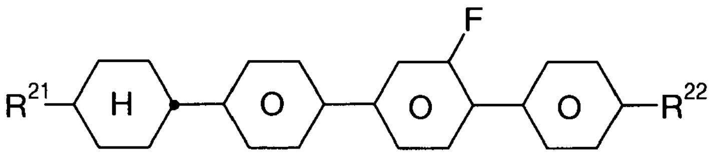

,

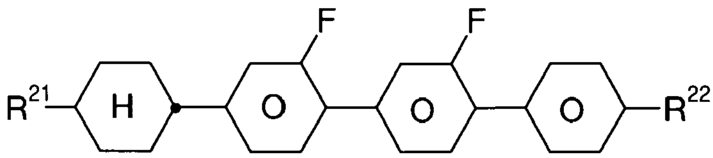

,

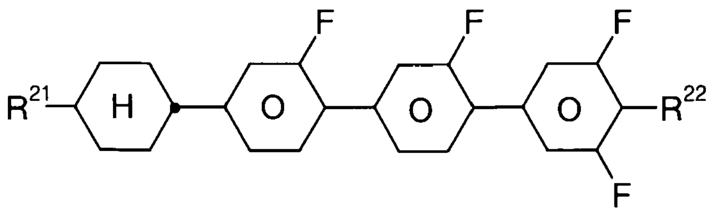

und/oder

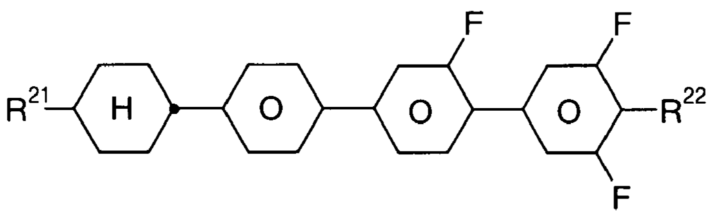

worin $R^{21}$ $R^1$ und $R^{22}$ $R^2$ bedeutet, $R^1$, $R^2$, $Z^1$ und $Z^5$ die in Formel I in Anspruch 1 genannten Bedeutungen besitzen, und Z eine der in Anspruch 1 für $Z^3$ in Formel I angegebenen Bedeutungen besitzt, vorzugsweise -CO-O- oder eine Einfachbindung, ganz besonders bevorzugt eine Einfachbindung bedeutet.

3. Optische Kompensationsfolie nach einem der Ansprüche 1 oder 2, **dadurch gekennzeichnet, dass** sie eine oder mehrere Verbindungen der Formel I in einem Gewichtsanteil von 0,5 bis 10 Gewichtsprozent, insbesondere von 2 bis 8 Gewichtsprozent, bezogen auf das Gesamtgewicht der Kompensationsfolie, beinhaltet.

4. Optische Kompensationsfolie nach einem der Ansprüche 1 oder 2**, dadurch gekennzeichnet, dass** sie eine oder mehrere Verbindungen der Formel I in einem Gewichtsanteil von 2 bis 6 Gewichtsprozent bezogen auf das Gesamtgewicht der Kompensationsfolie beinhaltet.

5. Optische Kompensationsfolie nach einem der Ansprüche 1 bis 4, **dadurch gekennzeichnet, dass** sie eine Dicke von 20 bis 150 μm, insbesondere von 30 bis 100 μm hat.

6. Optische Kompensationsfolie nach einem der Ansprüche 1 bis 5, **dadurch gekennzeichnet, dass** sie einen Retardationswert Ro von 30 bis 70 nm und einen Retardationswert Rth von 100 bis 160 nm hat, wobei Ro für den Retardationswert in der Richtung der Ebene und Rth für den Retardationswerit in der Richtung der Dicke der optischen Kompensationsfolie steht.

**7.** Optische Kompensationsfolie nach Anspruch 6, **dadurch gekennzeichnet, dass** sie einen Retardationswert Ro von 40 bis 60 nm und einen Retardationswert Rth von 120 bis 140 nm hat.

**8.** Optische Kompensationsfolie nach einem der Ansprüche 1 bis 5, **dadurch gekennzeichnet, dass** sie einen Retardationswert Ro von 30 bis 70 nm und einem Retardationswert Rth von 190 bis 250 nm hat.

**9.** Optische Kompensationsfolie nach Anspruch 8, **dadurch gekennzeichnet, dass** sie einen Retardationswert Ro von 40 bis 60 nm und einen Retardationswert Rth von 210 bis 230 nm hat.

**10.** Optische Kompensationsfolie nach einem der Ansprüche 1 bis 9, **dadurch gekennzeichet, dass** sie als Verbindung (en) der Formel I eine oder mehrere Verbindungen ausgewählt aus folgender Gruppe beinhaltet:

PGP-2-3:

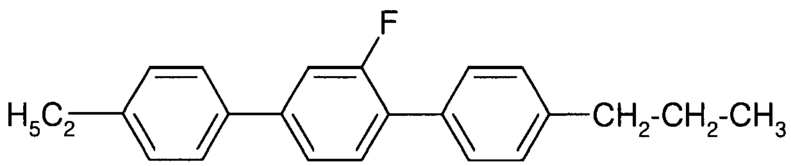

PGP-2-4:

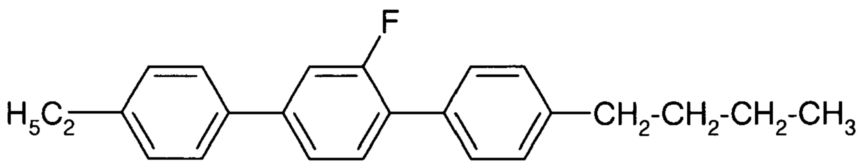

PGP-2-5:

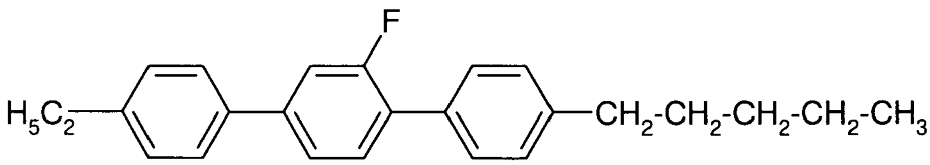

PGP-3-3

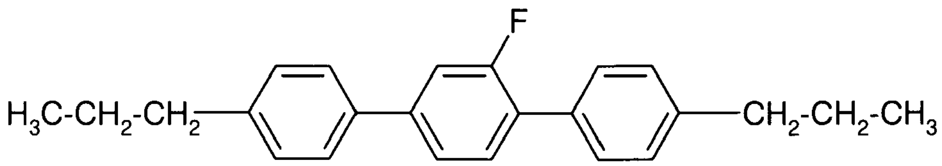

PGIGP-3-5:

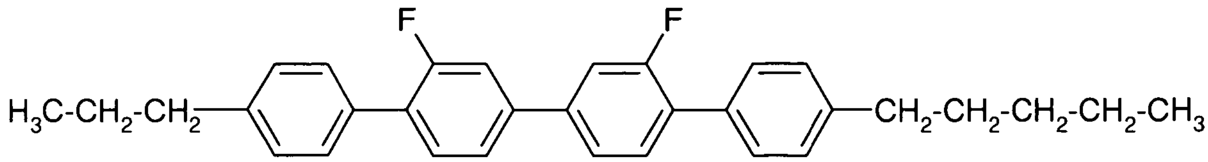

und

PYP-3-02:

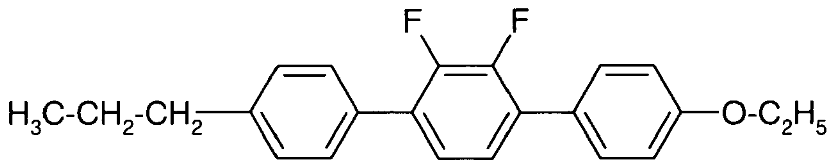

**11.** Optische Kompensationsfolie nach einem der Ansprüche 1 bis 10, **dadurch gekennzeichnet, dass** es sich bei dem als Basis dienenden Zelluloseacylat um ein Celluloseacetopropionat (CAP) und/oder um ein Zelluloseacetat handelt.

**12.** Verwendung mindestens einer der in einem der Ansprüche 1, 2 oder 10 genannten Verbindungen der Formel I zur Herstellung einer optischen Kompensationsfolie nach einem der Ansprüche 1 bis 11, **dadurch gekennzeichnet, dass** man die mindestens eine Verbindung der Formel I während der Herstellung der optischen Kompensationsfolie dieser zusetzt.

**13.** Polarisatorplatte, welche eine optische Kompensationsfolie nach einem der Ansprüche 1 bis 11 aufweist.

**14.** Flüssigkristallanzeige, welche mindestens eine optische Kompensationsfolie nach einem der Ansprüche 1 bis 11 aufweist.

**15.** Flüssigkristallanzeige nach Anspruch 14, **dadurch gekennzeichnet, dass** sie nur eine optische Kompensationsfolie nach einem der Ansprüche 1 bis 11, insbesondere nach einem der Ansprüche 8 oder 9, vorzugsweise in Kombination mit Anspruch 11, aufweist.

**16.** Flüssigkristallanzeige, **dadurch gekennzeichnet, dass** sie zwei optische Kompensationsfolien nach einem der Ansprüche 1 bis 11, insbesondere nach einem der Ansprüche 6 oder 7, aufweist.

**17.** Flüssigkristallanzeige nach einem der Ansprüche 14 bis 16, **dadurch gekennzeichnet, dass** sie eine VA-Anzeige ist.

**18.** Verfahren zur Herstellung einer optischen Kompensationsfolie nach einem der Ansprüche 1 bis 11, wobei man mindestens eine Verbindung der Formel I dem bei der Herstellung der Kompensationsfolien verwendeten Gemisch im Rahmen des Verfahrens zum Herstellen derartiger Folien zusetzt.

**19.** Verfahren nach Anspruch 18, bei dem es sich um ein Foliengieß-Verfahren handelt.

**20.** Verfahren nach einem der Ansprüche 18 oder 19, bei dem eine Reckung der nach dem Gießen und Trocknen erhältlichen Folie durchgeführt wird, insbesondere monoaxial, ohne oder vorzugsweise mit Halten senkrecht zur Reckungsrichtung, oder vorzugsweise biaxial.

**21.** Verfahren zur Herstellung einer Polarisatorplatte, bei der eine optische Kompensationsfolie nach einem der Ansprüche 1 bis 11 auf die Polarisatormembran oder auf eine Schutzschicht einer Polarisatormembran aufgebracht, insbesondere auflaminiert, wird.

**22.** Verfahren zur Herstellung eines Flüssigkristallanzeige, bei der mindestens eine Polarisatorplatte verwendet wird, auf die eine optische Kompensationsfolie nach einem der Ansprüche 1 bis 11 aufgebracht, insbesondere auflaminiert ist.

**23.** Verfahren nach Anspruch 22, **dadurch gekennzeichnet, dass** nur eine optische Kompensationsfolie nach einem der Ansprüche 1 bis 11, insbesondere nach einem der Ansprüche 8 oder 9, vorzugsweise in Kombination mit Anspruch 11, bei der Herstellung der Flüssigkristallanzeige verwendet wird.

**24.** Verfahren nach Anspruch 22, **dadurch gekennzeichnet, dass** zwei optische Kompensationsfolien nach einem der Ansprüche 1 bis 11, insbesondere nach einem der Ansprüche 6 oder 7, vorzugsweise in Kombination mit Anspruch 11, zur Herstellung der Flüssigkristallanzeige verwendet werden.

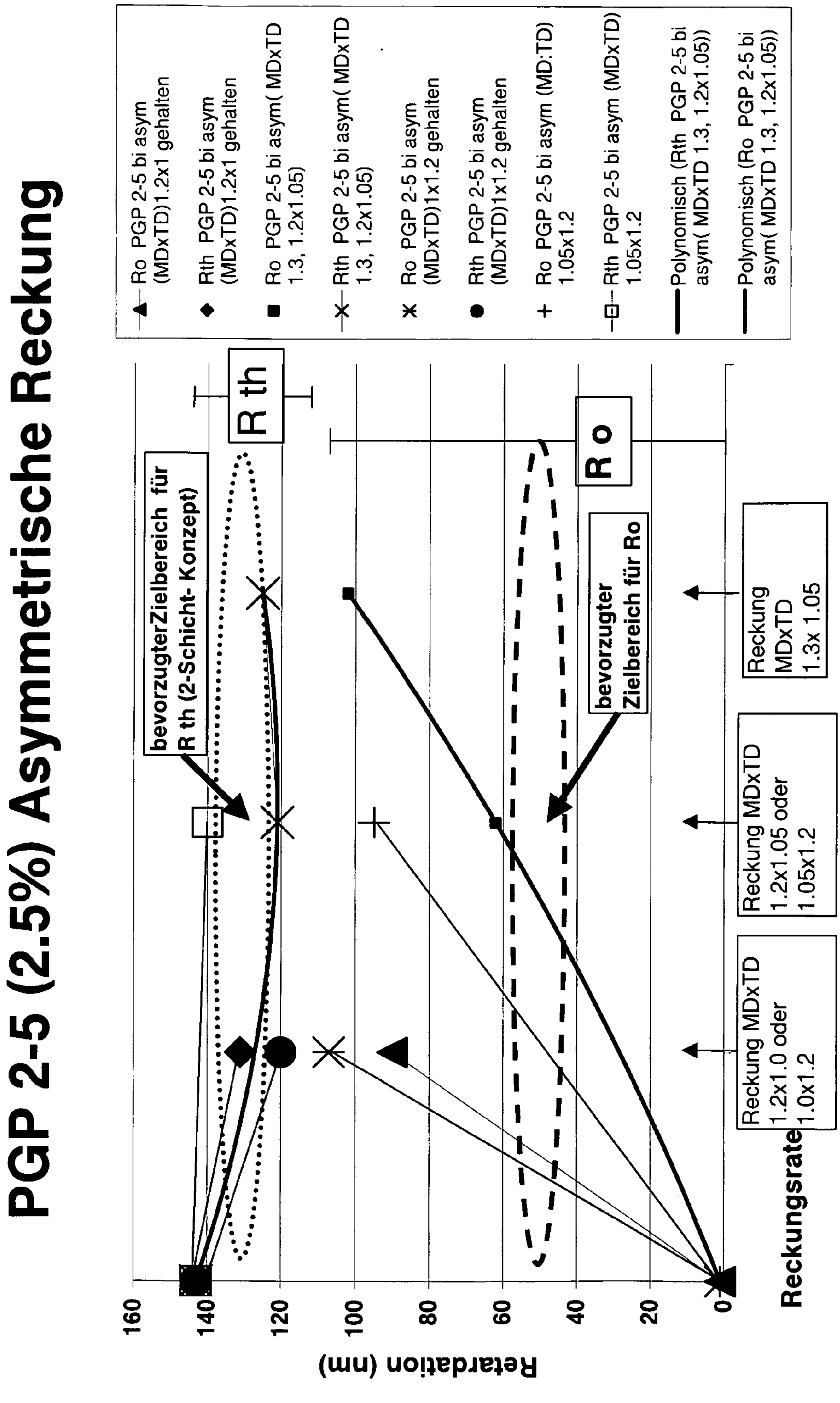
PGP 2-5 (2.5%) Asymmetrische Reckung
Retardation (nm)
160
140
120
100
80
60
40
20
0
Reckungsrate
Reckung MDxTD 1.2x1.0 oder 1.0x1.2
Reckung MDxTD 1.2x1.05 oder 1.05x1.2
Reckung MDxTD 1.3x 1.05
bevorzugterZielbereich für R th (2-Schicht- Konzept)
bevorzugter Zielbereich für Ro
R th
R o
Ro PGP 2-5 bi asym (MDxTD)1.2x1 gehalten
Rth PGP 2-5 bi asym (MDxTD)1.2x1 gehalten
Ro PGP 2-5 bi asym( MDxTD 1.3, 1.2x1.05)
Rth PGP 2-5 bi asym( MDxTD 1.3, 1.2x1.05)
Ro PGP 2-5 bi asym (MDxTD)1x1.2 gehalten
Rth PGP 2-5 bi asym (MDxTD)1x1.2 gehalten
Ro PGP 2-5 bi asym (MD:TD) 1.05x1.2
Rth PGP 2-5 bi asym (MDxTD) 1.05x1.2
Polynomisch (Rth PGP 2-5 bi asym( MDxTD 1.3, 1.2x1.05))
Polynomisch (Ro PGP 2-5 bi asym( MDxTD 1.3, 1.2x1.05))

FIG. 1

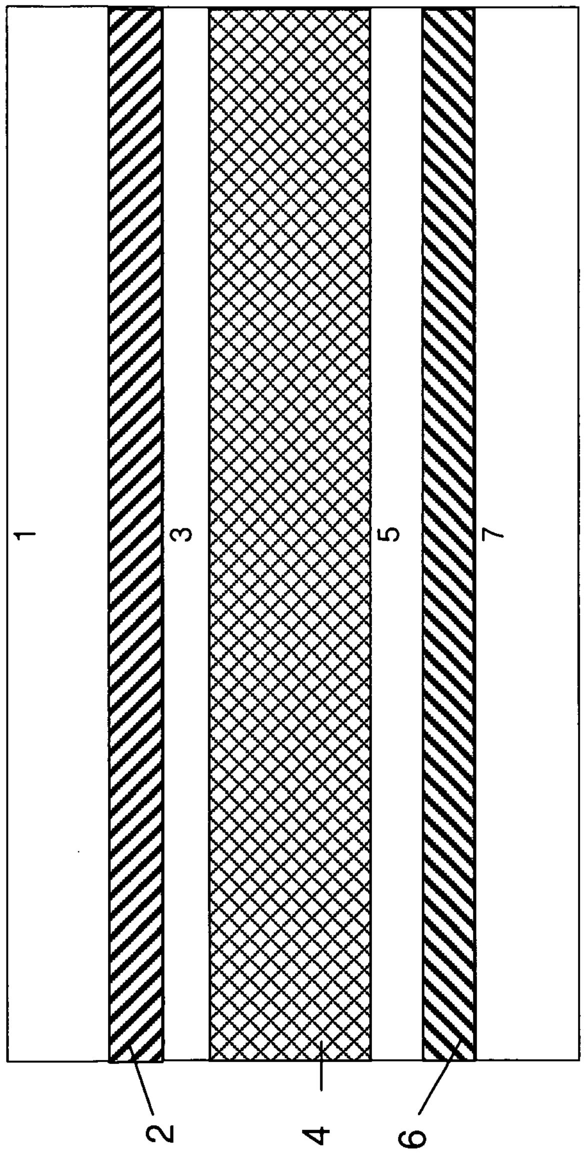


Fig. 2

Europäisches Patentamt

# EUROPÄISCHER RECHERCHENBERICHT

Nummer der Anmeldung
EP 07 02 5159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 182 470 A (FUJI PHOTO FILM CO LTD [JP] FUJIFILM CORP [JP]) 27. Februar 2002 (2002-02-27) * Absatz [0021] - Absatz [0057] * * Seite 26, Absatz 72 * | 1-24 | INV. G02B5/30 C09K19/16 |
| A | US 2004/161551 A1 (TASAKA KOJI [JP] ET AL) 19. August 2004 (2004-08-19) * Seite 14 * | 1-24 | |
| A,D | US 2003/067573 A1 (AMINAKA EIICHIRO [JP]) 10. April 2003 (2003-04-10) * das ganze Dokument * | 1-24 | |
| A,D | EP 1 346 995 A (MERCK PATENT GMBH [DE]) 24. September 2003 (2003-09-24) * das ganze Dokument * | 1-24 | |
| A,D | EP 0 132 377 A (SECR DEFENCE BRIT [GB]; MERCK PATENT GMBH [DE]) 30. Januar 1985 (1985-01-30) * das ganze Dokument * | 1-24 | RECHERCHIERTE SACHGEBIETE (IPC) |
| A,D | GB 2 240 778 A (MERCK PATENT GMBH [DE]) 14. August 1991 (1991-08-14) * das ganze Dokument * | 1-24 | G02B C09K |

Der vorliegende Recherchenbericht wurde für alle Patentansprüche erstellt

| Recherchenort | Abschlußdatum der Recherche | Prüfer |
|---|---|---|
| Den Haag | 9. Juli 2008 | Quertemont, Eric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

2

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 07 02 5159

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2008

| Im Recherchenbericht angeführtes Patentdokument | Datum der Veröffentlichung | Mitglied(er) der Patentfamilie | Datum der Veröffentlichung |
|---|---|---|---|
| EP 1182470 A | 27-02-2002 | AU 3841800 A | 10-11-2000 |
| | | CN 1348547 A | 08-05-2002 |
| | | WO 0065384 A1 | 02-11-2000 |
| | | US 7166339 B1 | 23-01-2007 |
| US 2004161551 A1 | 19-08-2004 | CN 1523376 A | 25-08-2004 |
| | | CN 1975473 A | 06-06-2007 |
| | | KR 20040074610 A | 25-08-2004 |
| US 2003067573 A1 | 10-04-2003 | KEINE | |
| EP 1346995 A | 24-09-2003 | DE 10211597 A1 | 02-10-2003 |
| | | JP 2003286208 A | 10-10-2003 |
| | | US 2004006235 A1 | 08-01-2004 |
| | | US 2006216754 A1 | 28-09-2006 |
| EP 0132377 A | 30-01-1985 | DE 3472400 D1 | 04-08-1988 |
| | | JP 2085618 C | 23-08-1996 |
| | | JP 6049448 A | 22-02-1994 |
| | | JP 7108975 B | 22-11-1995 |
| | | JP 2021072 C | 19-02-1996 |
| | | JP 7039358 B | 01-05-1995 |
| | | JP 60051135 A | 22-03-1985 |
| | | US 4594465 A | 10-06-1986 |
| | | US 4696549 A | 29-09-1987 |
| GB 2240778 A | 14-08-1991 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6559912 B
- US 20030218709 A
- EP 0132377 A2
- EP 1346995 A1
- GB 2240778 A
- US 20050045064 A1